# EUROPEAN PATENT APPLICATION

(11) **EP 4 807 446 A1**
(43) Date of publication of application: **16.09.2026**
(21) Application number: 26164451.2
(22) Date of filing: 12.03.2026
(51) Int. Cl.: G03B 21/00, G02B 7/00, G02F 1/1333, G03B 21/16, H04N 9/31

(54) **LIGHT MODULATION MODULE, PROJECTOR, AND POLARIZATION UNIT**

(30) Priority: 13.03.2025 JP 2025040054
(71) Applicant: Seiko Epson Corporation, Tokyo 160-8801 (JP)
(72) Inventor: KADOTANI, Norikazu, Suwa-shi, 392-8502 (JP); KAWAKAMI, Shotaro, Suwa-shi, 392-8502 (JP); MIYASHITA, Tomoaki, Suwa-shi, 392-8502 (JP); SAKAI, Kenshi, Suwa-shi, 392-8502 (JP)
(74) Representative: Lewis Silkin LLP

(57) **Abstract**

A light modulation module includes: a panel module configured to modulate incident light; a polarization plate disposed to receive light emitted from the panel module; a heat dissipation substrate having thermal conductivity equal to or greater than thermal conductivity of the polarization plate; and a cold plate configured to cool the polarization plate via the heat dissipation substrate, in which the heat dissipation substrate has a first surface thermally coupled to the polarization plate, and a second surface opposite the first surface, and the cold plate includes an opening through which light passes, a coupling portion disposed around the opening and thermally coupled to the second surface, and a circulation portion through which a liquid refrigerant circulates.

## Description

The present application is based on, and claims priority from JP Application Serial Number 2025-040054, filed March 13, 2025, the disclosure of which is hereby incorporated by reference herein in its entirety.

### BACKGROUND

### 1. Technical Field

The present disclosure relates to a light modulation module, a projector, and a polarization unit.

### 2. Related Art

In the past, a projection-type image display apparatus including a light source unit, an illumination optical unit, a projection lens system, and a cooling structure has been known (see, e.g., JP-A-2023-179986).

In the projection-type image display device described in JP-A-2023-179986, the illumination optical unit includes an image display unit including a member for blue color that modulates blue light, a member for green light that modulates green light, and a member for red color that modulates red light. Each of the member for blue color, the member for green color, and the member for red color includes an incident-side polarization plate, a liquid crystal panel, and an exit-side polarization plate. The image display unit is housed in a sealed housing.

The cooling structure cools the image display unit. The cooling structure includes a heat exchanger and a circulation fan.

The heat exchanger cools the inside air of the sealed housing. The circulation fan is housed in the sealed housing and blows the inside air to the image display unit. Specifically, the circulation fan includes a first fan, a second fan, and a third fan.

Air sucked by the first fan flows to the member for red color through an air guide duct coupled to the first fan. Air sucked by the second fan flows to the member for blue color through an air guide duct coupled to the second fan. Air sucked by the third fan flows to the member for green color through an air guide duct coupled to the third fan.

Accordingly, the incident-side polarization plate, the liquid crystal panel, and the exit-side polarization plate of each of the members are cooled.

JP-A-2023-179986 is an example of the related art.

In recent years, projectors are required to achieve high luminance of projection images.

To cope with such a request, when increasing the luminance of a light beam with which a display device is irradiated by the light source device, in the projection-type image display device described in JP-A-2023-179986, there is a problem that the image display unit cannot be sufficiently cooled and the image display unit is likely to deteriorate. In particular, when displaying a black image, since there arises a necessity of blocking substantially all of light having passed through the liquid crystal panel with the exit-side polarization plate provided to the image display unit, a problem that the temperature of the exit-side polarization plate increases and the exit-side polarization plate becomes likely to deteriorate becomes conspicuous.

In view of these problems, a configuration capable of improving a cooling efficiency of the polarization plate has been demanded.

### SUMMARY

A light modulation module according to a first aspect of the present disclosure includes: a panel module configured to modulate incident light; a polarization plate on which light emitted from the panel module is incident; a heat dissipation substrate having thermal conductivity equal to or higher than thermal conductivity of the polarization plate; and a cold plate configured to cool the polarization plate via the heat dissipation substrate, in which the heat dissipation substrate has a first surface thermally coupled to the polarization plate, and a second surface at an opposite side to the first surface, and the cold plate includes an opening through which light passes, a coupling portion disposed around the opening and thermally coupled to the second surface, and a circulation portion through which a liquid refrigerant circulates.

A projector according to a second aspect of the present disclosure includes: the light modulation module according to the first aspect described above; a light source device configured to emit light to be incident on the light modulation module; and a projection optical device configured to project light modulated by the light modulation module.

A polarization unit according to a third aspect of the present disclosure includes: a polarization plate on which light is incident; a heat dissipation substrate having thermal conductivity equal to or higher than thermal conductivity of the polarization plate, and coupled to the polarization plate in a heat transferable manner; and a cold plate configured to cool the polarization plate via the heat dissipation substrate, in which the heat dissipation substrate has a first surface facing the polarization plate, and a second surface at an opposite side to the first surface, and the cold plate includes an opening through which light passes, a coupling portion disposed around the opening and thermally coupled to the second surface, and a circulation portion through which a liquid refrigerant circulates.

### BRIEF DESCRIPTION OF THE DRAWINGS

FIG. 1 is a schematic diagram showing a configuration of a projector according to a first embodiment.
FIG. 2 is a schematic diagram illustrating a configuration of a light source device according to the first embodiment.
FIG. 3 is a perspective view showing a first light modulation module according to the first embodiment.
FIG. 4 is a perspective view showing the first light modulation module according to the first embodiment.
FIG. 5 is an exploded perspective view showing the first light modulation module according to the first embodiment.
FIG. 6 is an exploded perspective view showing the first light modulation module according to the first embodiment.
FIG. 7 is an exploded perspective view showing a panel module according to the first embodiment.
FIG. 8 is an exploded perspective view showing the panel module according to the first embodiment.
FIG. 9 is an exploded perspective view showing a polarization unit according to the first embodiment.
FIG. 10 is an exploded perspective view showing the polarization unit according to the first embodiment.
FIG. 11 is a cross-sectional view showing a polarization unit according to the first embodiment.
FIG. 12 is a view showing a circulation portion of a plate main body according to the first embodiment.
FIG. 13 is a perspective view showing a second light modulation module according to the first embodiment.
FIG. 14 is a perspective view showing the second light modulation module according to the first embodiment.
FIG. 15 is a perspective view showing a third light modulation module according to the first embodiment.
FIG. 16 is a perspective view showing the third light modulation module according to the first embodiment.
FIG. 17 is a perspective view showing an overall configuration of the cooling device according to the first embodiment.
FIG. 18 is a perspective view showing the overall configuration of the cooling device according to the first embodiment.
FIG. 19 is a schematic diagram showing the overall configuration of the cooling device according to the first embodiment.
FIG. 20 is a block diagram showing a configuration of a control device according to the first embodiment.
FIG. 21 shows a diagram showing a modification of the plate main body according to the first embodiment.
FIG. 22 is a schematic diagram showing a configuration of a cooling device provided to a projector according to a second embodiment.
FIG. 23 is a schematic diagram showing a configuration of an image projection device provided to a projector according to a third embodiment.
FIG. 24 is a schematic diagram illustrating a configuration of a cooling device according to the third embodiment.
FIG. 25 is a schematic diagram showing a configuration of a cooling device provided to a projector according to a fourth embodiment.

### DESCRIPTION OF EMBODIMENTS

### First Embodiment

A first embodiment of the present disclosure will hereinafter be described with reference to the drawings.

### External Configuration of Projector

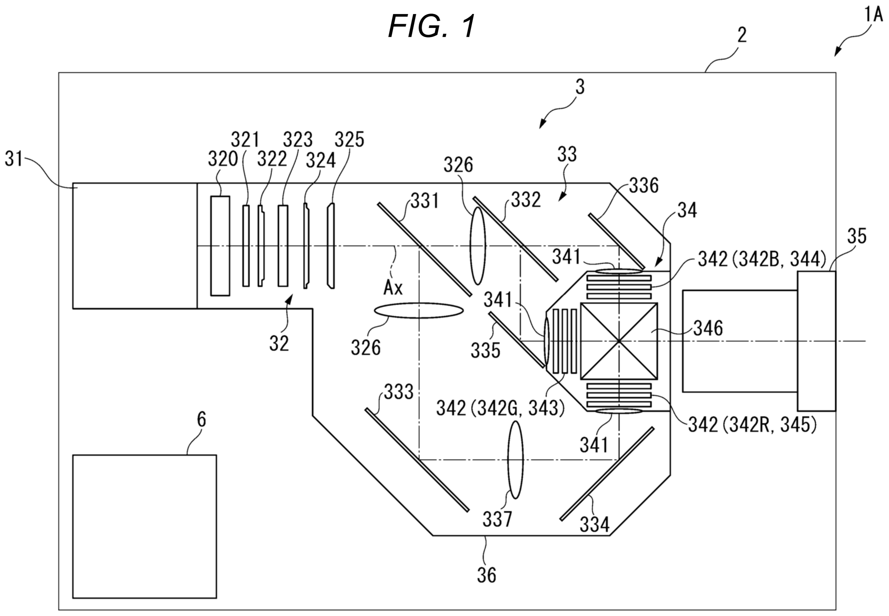

FIG. 1 is a schematic diagram showing a configuration of a projector 1A according to the present embodiment.

The projector 1A according to the present embodiment is a projection-type display apparatus that modulates light emitted from a light source device 31 described later to project image light according to image information. As shown in FIG. 1, the projector 1A includes an exterior housing 2 constituting an exterior of the projector 1A, and an image projection device 3 and a control device 6 housed in the exterior housing 2. In addition, although not shown in FIG. 1, the projector 1A includes a power supply device (not shown) in addition to a cooling device 7A that cools a cooling target.

A configuration of the projector 1A will hereinafter be described in detail.

### Configuration of Image Projection Device

The image projection device 3 forms and projects the image light according to an image signal input from the control device 6. The image projection device 3 includes a light source device 31, a homogenization device 32, a color separation device 33, an image forming device 34, a projection optical device 35, and an optical component housing 36.

### Configuration of Light Source Device

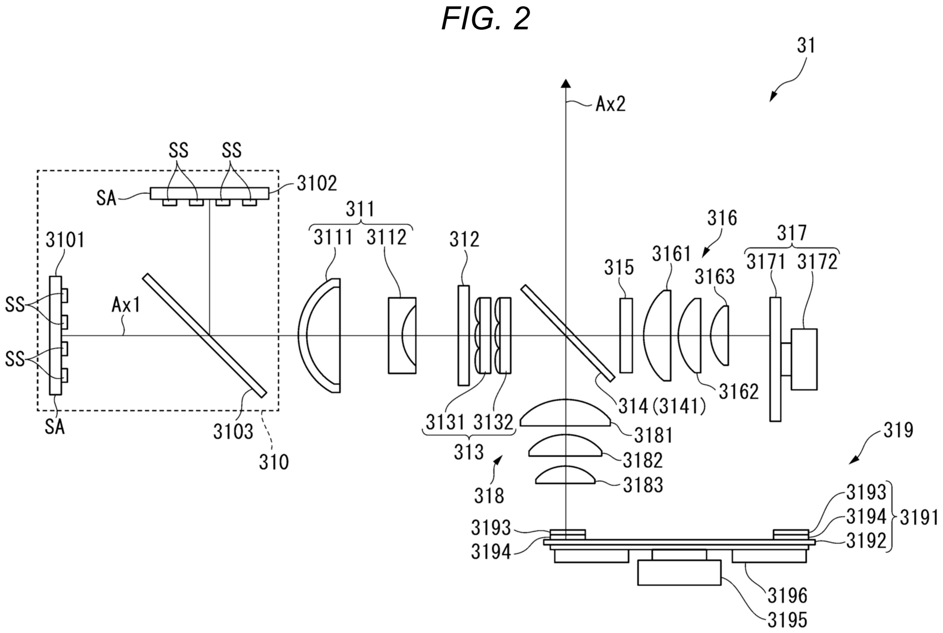

FIG. 2 is a schematic diagram showing a configuration of the light source device 31.

The light source device 31 emits white illumination light including red, green, and blue light to the homogenization device 32. As shown in FIG. 2, the light source device 31 includes a light source 310, an afocal optical element 311, a first retardation element 312, a homogenizer optical device 313, a light combining device 314, a second retardation element 315, a first light collection element 316, a light diffusion device 317, a second light collection element 318, and a wavelength conversion device 319.

The light source 310, the afocal optical element 311, the first retardation element 312, the homogenizer optical device 313, the second retardation element 315, the first light collection element 316, and the light diffusion device 317 are arranged on a first illumination optical axis Ax1. Meanwhile, the homogenization device 32 described later, the second light collection element 318, and the wavelength conversion device 319 are disposed on a second illumination optical axis Ax2 crossing the first illumination optical axis Ax1. Further, the light combining device 314 is disposed at an intersection portion between the first illumination optical axis Ax1 and the second illumination optical axis Ax2.

### Configuration of Light Source

The light source 310 emits light-source light that is blue light. The light source 310 includes a first light source unit 3101, a second light source unit 3102, and a light combining member 3103.

Each of the first light source unit 3101 and the second light source unit 3102 includes a light emitting element array SA in which a plurality of light emitting elements SS as LDs (Laser Diodes) is arranged in a matrix, and a collimating element (not illustrated) that collimates blue light emitted from the light emitting element array SA and reduces the diameter of the blue light. The light emitting elements SS each may emit, for example, excitation light having a peak wavelength of 440 nm, but may emit excitation light having a peak wavelength of 446 nm or excitation light having a peak wavelength of 460 nm. Further, the light emitting elements respectively emitting excitation light different in peak wavelength from each other may be mixedly disposed in each of the light source units 3101, 3102. The excitation light emitted from the light emitting element SS is collimated by the collimating element and enters the light combining member 3103.

Note that in the present embodiment, the excitation light emitted from each of the light emitting elements SS is s-polarized light with respect to the light combining device 314, but the excitation light may be p-polarized light with respect to the light combining device 314. Further, the light source units 3101, 3102 may include the light emitting element SS that emits the excitation light as the s-polarized light and the light emitting element SS that emits excitation light as the p-polarized light. In this case, the first retardation element 312 can be omitted.

The light combining member 3103 combines the first light-source light emitted from the first light source unit 3101 and the second light-source light emitted from the second light source unit 3102 to emit the light thus combined.

Note that the light source 310 may include only the first light source unit 3101, or may be configured to include more light source units. When the light source 310 includes only the first light source unit 3101, the light combining member 3103 can be omitted.

### Configuration of Afocal Optical Element and First Retardation Element

The afocal optical element 311 has lenses 3111, 3112, reduces the diameter of the light-source light incident from the light source 310, and then collimates and emits the light thus reduced in diameter.

The first retardation element 312 is a half-wave plate. A part of the light-source light as the s-polarized light incident from the afocal optical element 311 is converted into the light-source light as the p-polarized light by being passed through the first retardation element 312. Thus, the light-source light having passed through the first retardation element 312 becomes the light-source light in which the s-polarized light and the p-polarized light are mixed.

### Configuration of Homogenizer Optical Device

The homogenizer optical device 313 includes two multi-lenses 3131, 3132 and homogenizes the illuminance distribution of the light-source light incident on an illumination target region in the light diffusion device 317 and the wavelength conversion device 319. Note that the homogenizer optical device 313 may be disposed not limited at the light exit side of the first retardation element 312, but also between the afocal optical element 311 and the first retardation element 312. Further, a diffuse transmission element which has a configuration of including a hologram, a configuration in which a plurality of small lenses are arranged in a plane orthogonal to an optical axis, or a configuration in which a surface through which the light passes is a rough surface and which homogenizes the illuminance distribution of the incident light may be adopted instead of the homogenizer optical device 313.

### Configuration of Light combining Device

The light combining device 314 includes a polarization separation layer 3141 inclined by approximately 45° with respect to each of the first illumination optical axis Ax1 and the second illumination optical axis Ax2.

The polarization separation layer 3141 has a characteristic of separating the s-polarized light and the p-polarized light contained in the light-source light incident via the homogenizer optical device 313 from each other, and also has a characteristic of transmitting fluorescence generated in the wavelength conversion device 319 regardless of the polarization state of the fluorescence. That is, the polarization separation layer 3141 has a wavelength-selective polarization separation characteristic of separating the s-polarized light and the p-polarized light from each other with respect to the light having a wavelength in the blue light region, and transmitting each of the s-polarized light and the p-polarized light with respect to the light having a wavelength in the green light region or the red light region.

In this manner, by the light combining device 314 also functioning as a light separation device, out of the light-source light incident from the homogenizer optical device 313, the p-polarized light is transmitted toward the second retardation element 315 along the first illumination optical axis Ax1, and the s-polarized light is reflected toward the second light collection element 318 along the second illumination optical axis Ax2. Further, as will be described later in detail, the light combining device 314 combines the light-source light incident via the second retardation element 315 and the fluorescence incident via the second light collection element 318.

### Configuration of Second Retardation Element and First Light Collection Element

The second retardation element 315 is a quarter-wave plate, converts the light-source light as the p-polarized light incident from the light combining device 314 into the light-source light as circularly polarized light, and converts the light-source light incident from the first light collection element 316 into the s-polarized light.

The first light collection element 316 converges the light-source light having passed through the second retardation element 315 on the light diffusion device 317. In the present embodiment, the first light collection element 316 is configured with three lenses 3161 to 3163, but the number of lenses constituting the first light collection element 316 is not limited to three.

### Configuration of Light Diffusion Device

The light diffusion device 317 diffuses the light-source light incident thereon at substantially the same diffusion angle as that of the fluorescence emitted from the wavelength conversion device 319. The light diffusion device 317 includes a light diffusion element 3171 which is shaped like a disk, and which is provided with an annular reflective layer centered on a rotation center, and a rotation device 3172 that rotates the light diffusion element 3171. The reflective layer causes Lambertian reflection of the incident light.

The light-source light diffusely reflected by the light diffusion element 3171 enters the second retardation element 315 once again via the first light collection element 316. When reflected by the light diffusion element 3171, the circularly polarized light incident on the light diffusion element 3171 becomes circularly polarized light having a reverse direction, and is converted into the light-source light as the s-polarized light having a polarization direction rotated by 90° with respect to the light-source light as the p-polarized light passing through the light combining device 314 in the process of passing through the second retardation element 315. The light-source light as the s-polarized light is reflected by the polarization separation layer 3141 described above, and then enters the homogenization device 32 described later as blue light along the second illumination optical axis Ax2.

Note that the light diffusion element 3171 of the light diffusion device 317 is not necessarily rotated. That is, the rotation device 3172 may be omitted.

### Configuration of Second Light Collection Element

The light-source light as the s-polarized light that has passed through the homogenizer optical device 313 and has been reflected by the polarization separation layer 3141 enters the second light collection element 318. The second light collection element 318 converges the light-source light incident thereon on the wavelength conversion layer 3193, which is an illumination target region of the wavelength conversion device 319, and at the same time collimates the fluorescence emitted from the wavelength conversion device 319 to emit the fluorescence thus collimated to the polarization separation layer 3141 described above. Similarly to the first light collection element 316, the second light collection element 318 is configured with three lenses 3181 to 3183, but the number of lenses provided to the second light collection element 318 is not limited to three.

### Configuration of Wavelength Conversion Device

The wavelength conversion device 319 is for converting the wavelength of incident light, and in the present embodiment, performs the wavelength conversion on the blue light as the excitation light into the fluorescence as conversion light. The fluorescence is, for example, light having a peak wavelength in a wavelength region of 500 to 700 nm, and includes green light and red light. The wavelength conversion device 319 includes a wavelength conversion element 3191, a rotation device 3195 that rotates the wavelength conversion element 3191, and a heat dissipation member 3196 that dissipates heat transferred from the wavelength conversion element 3191.

The wavelength conversion element 3191 includes a support body 3192 shaped like a disk, and a wavelength conversion layer 3193 and a reflective layer 3194 located at a surface of the support body 3192 on which the excitation light is incident.

The wavelength conversion layer 3193 is a phosphor layer including a phosphor that is excited by incidence of the blue light as the light-source light to diffusely emit the fluorescence as non-polarized light. A part of the fluorescence generated in such a wavelength conversion layer 3193 is emitted toward the second light collection element 318, and another part thereof is emitted toward the reflective layer 3194.

The reflective layer 3194 is disposed between the wavelength conversion layer 3193 and the support body 3192 to reflect, toward the second light collection element 318, the fluorescence incident from the wavelength conversion layer 3193.

When the wavelength conversion element 3191 is irradiated with the light-source light, the wavelength conversion element 3191 diffusely emits the fluorescence toward the second light collection element 318. The fluorescence incident on the second light collection element 318 is incident on the polarization separation layer 3141 via the second light collection element 318, and passes through the polarization separation layer 3141 along the second illumination optical axis Ax2 to enter the homogenization device 32. That is, the fluorescence is combined with the blue light reflected by the polarization separation layer 3141 by passing through the polarization separation layer 3141, and is emitted from the light source device 31 as white illumination light.

Note that the wavelength conversion layer 3193 generates heat by the incidence of the light-source light, and the heat generated in the wavelength conversion layer 3193 is transferred to the support body 3192 via the reflective layer 3194. The heat transferred to the support body 3192 is dissipated by the heat dissipation member 3196 coupled to the support body 3192.

### Configuration of Homogenization Device and Color Separation Device

The homogenization device 32 illustrated in FIG. 1 homogenizes the illuminance in a plane orthogonal to the central axis of the illumination light emitted from the light source device 31. The homogenization device 32 includes a retardation element 320 which is a half-wave plate, a UV filter 321, a first lens array 322, a light control device 323, a second lens array 324, a polarization conversion element 325, and a superimposing lens 326. Out of these components, the polarization conversion element 325 is for aligning the polarization direction of the incident light.

The color separation device 33 separates the illumination light incident from the homogenization device 32 into three colored light beams of red light, green light, and blue light. The color separation device 33 includes dichroic mirrors 331, 332, reflecting mirrors 333 to 336, and a relay lens 337.

### Configuration of Image Forming Device

The image forming device 34 modulates each of the colored light beams thus separated and then combines the colored light beams thus modulated with each other to form image light to be projected by the projection optical device 35. The image forming device 34 includes a field lens 341 and a light modulation device 342 provided for each of the colored light beams, and a single color combining device 346.

Out of these components, the three light modulation devices 342 modulate the colored light beams incident via the corresponding field lenses 341, respectively. The three light modulation devices 342 include a red light modulation element 342R, which modulates the red light, a green light modulation element 342G, which modulates the green light, and a blue light modulation element 342B, which modulates the blue light.

Out of these components, a first light modulation module 343 described later is adopted as the green light modulation element 342G, a second light modulation module 344 described later is adopted as the blue light modulation element 342B, and a third light modulation module 345 described later is adopted as the red light modulation element 342R. The light modulation modules 343, 344, and 345 will be described later in detail.

The color combining device 346 is configured with a cross dichroic prism formed in a substantially quadrangular prism shape. The color combining device 346 has three planes of incidence of light on which the red light, the green light, and the blue light having passed through the light modulation elements 342B, 342G, and 342R are incident, and a light exit surface from which the image light obtained by combining the colored light beams is emitted. Further, the light exit surface faces the projection optical device 35.

Note that, although not illustrated in detail, the light modulation elements 342B, 342G, and 342R are supported by a support member provided to the color combining device 346, and thus the light modulation elements 342B, 342G, and 342R and the color combining device 346 are integrated with each other.

### Configuration of Projection Optical Device and Optical Component Housing

The projection optical device 35 projects, in an enlarged manner, the image light combined by the color combining device 346. As the projection optical device 35, a combination lens formed of a plurality of lenses arranged in a lens barrel can be adopted.

The optical component housing 36 is a box-shaped housing in which an illumination optical axis Ax is set. The light source device 31, the homogenization device 32, the color separation device 33, and the image forming device 34 are arranged at respective positions on the illumination optical axis Ax in the optical component housing 36. Further, the projection optical device 35 is located outside the optical component housing 36, but is disposed in accordance with the illumination optical axis Ax.

### Configuration of First Light Modulation Module

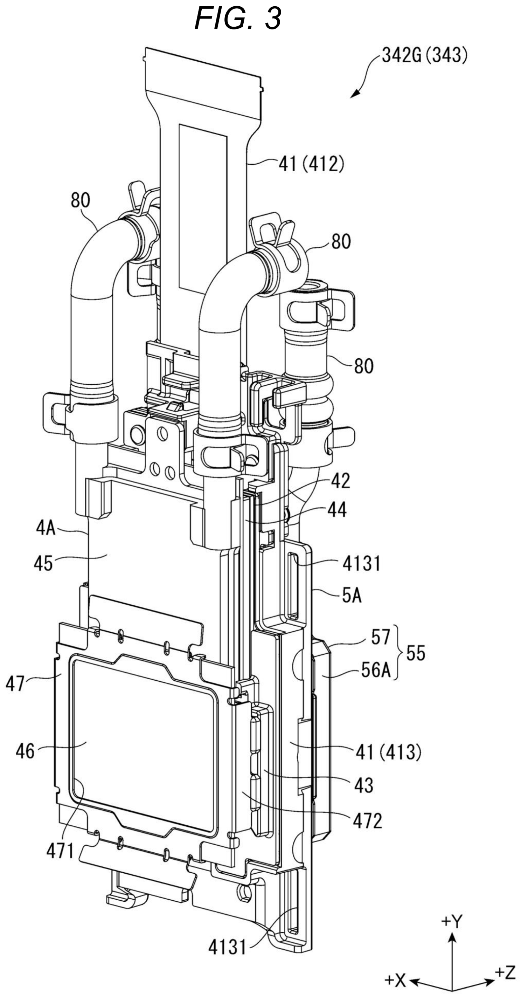

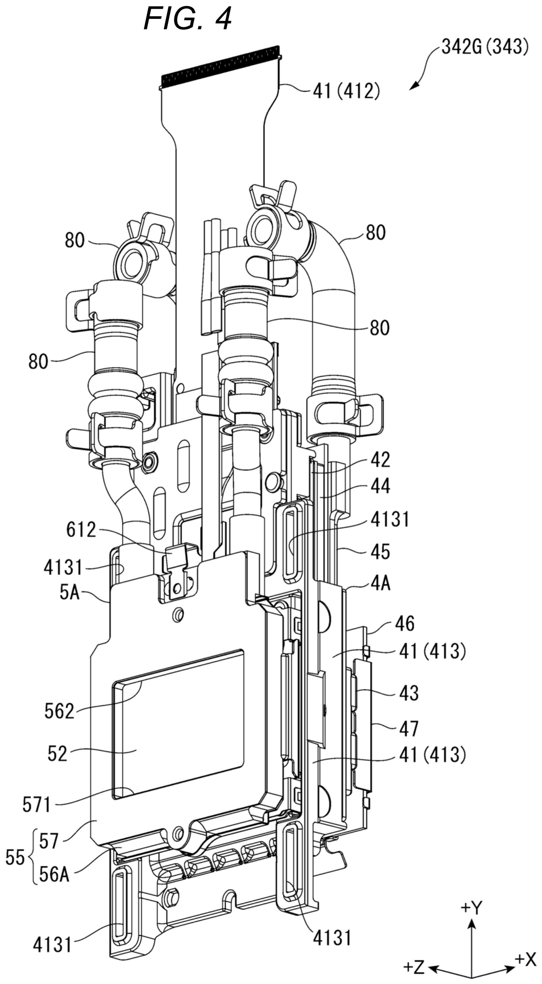

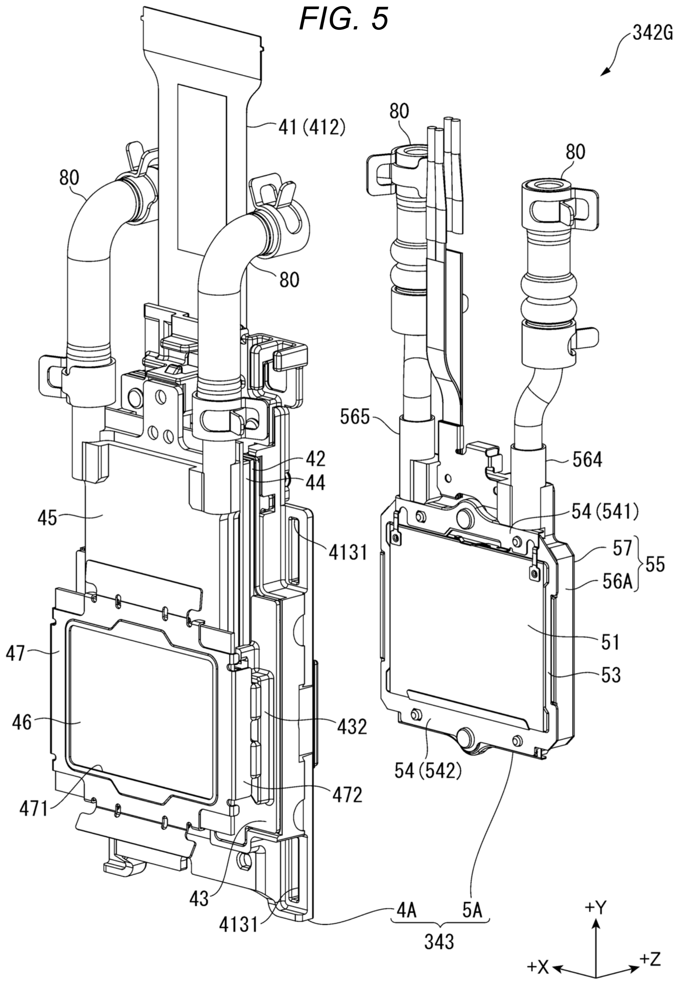

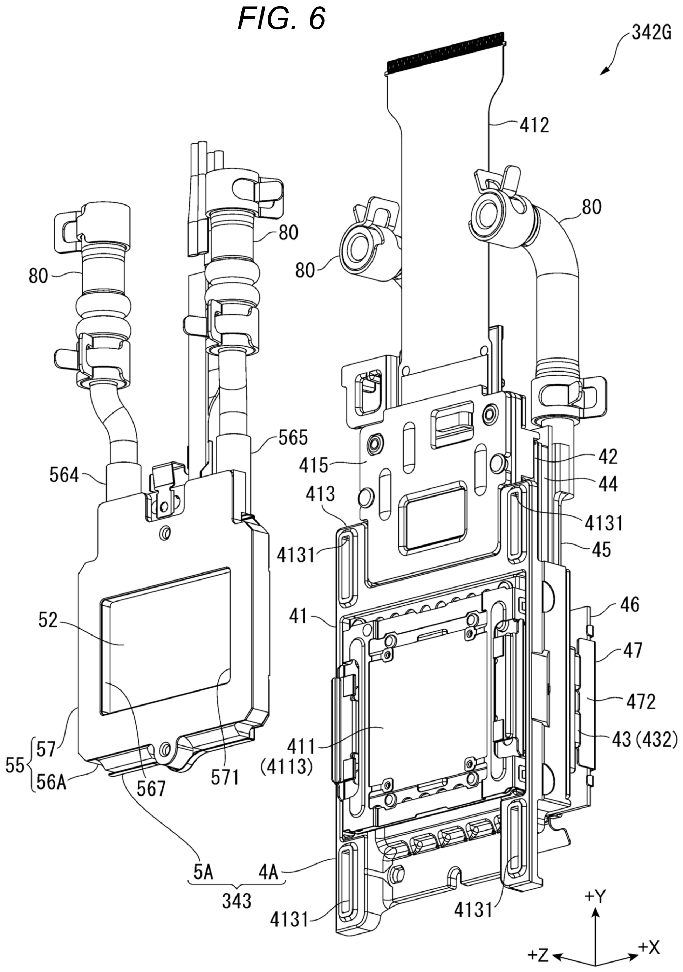

FIG. 3 is a perspective view illustrating the first light modulation module 343 viewed from a light incident side, and FIG. 4 is a perspective view illustrating the first light modulation module 343 viewed from a light exit side. FIG. 5 is an exploded perspective view illustrating the first light modulation module 343 viewed from the light incident side, and FIG. 6 is an exploded perspective view illustrating the first light modulation module 343 viewed from the light exit side.

The first light modulation module 343 corresponds to a light modulation module in the present disclosure and modulates the colored light incident thereon. In the present embodiment, the first light modulation module 343 constitutes the green light modulation element 342G. As illustrated in FIGS. 3 to 6, the first light modulation module 343 includes a panel module 4A and a polarization unit 5A, and is configured by combining the panel module 4A and the polarization unit 5A with each other.

In the following description, in each of the light modulation modules 343 to 345, three directions orthogonal to each other are defined as a +X direction, a +Y direction, and a +Z direction. In the present embodiment, the traveling direction of the incident light is the +Z direction. The leftward direction when viewing the light modulation modules 343 to 345 along the +Z direction so that the +Y direction coincides with the upward direction is defined as the +X direction. Although not shown in the drawings, an opposite direction to the +X direction is defined as a -X direction, an opposite direction to the +Y direction is defined as a -Y direction, and an opposite direction to the +Z direction is defined as a -Z direction. That is, the +Z direction side with respect to the first light modulation module 343 is the light exit side with respect to the first light modulation module 343, and the -Z direction side with respect to the first light modulation module 343 is the light incident side with respect to the first light modulation module 343. In addition, an axis along the +X direction or the -X direction is defined as an X axis, an axis along the +Y direction or the -Y direction is defined as a Y axis, and an axis along the +Z direction or the -Z direction is defined as a Z axis.

### Configuration of Panel Module

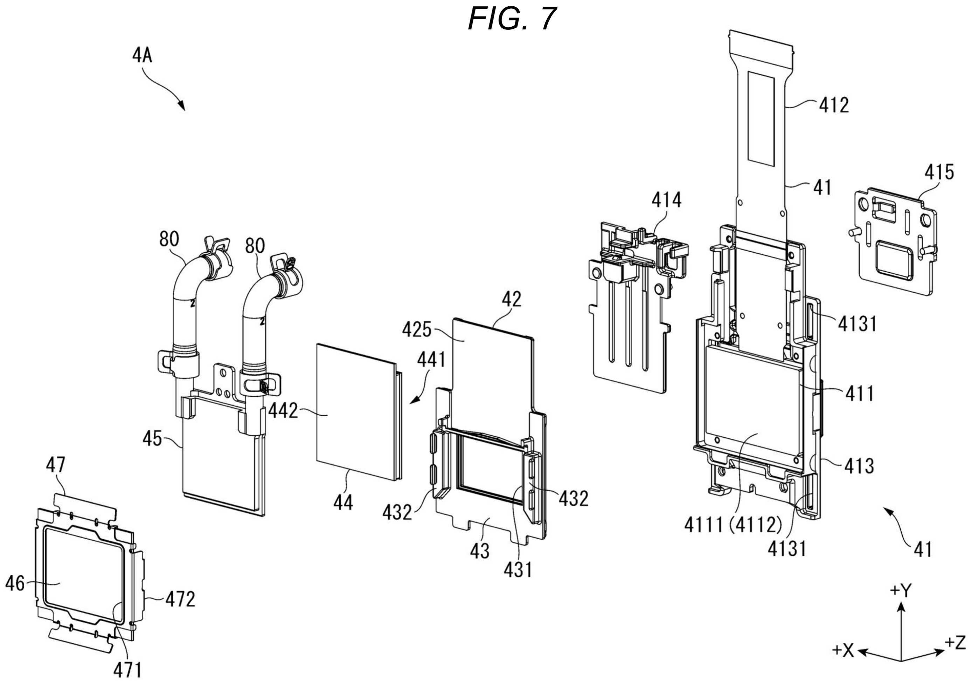

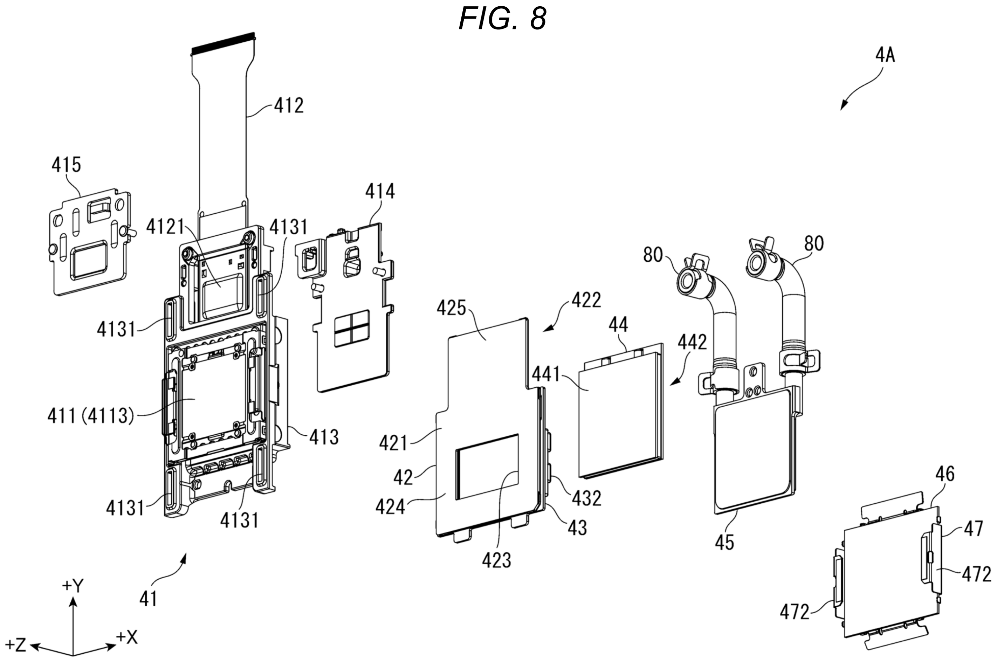

FIG. 7 is an exploded perspective view showing the panel module 4A viewed from the light incident side, and FIG. 8 is an exploded perspective view showing the panel module 4A viewed from the light exit side.

As illustrated in FIGS. 7 and 8, the panel module 4A includes a liquid crystal panel 41, a heat diffuser 42, a holding member 43, a thermoelectric conversion device 44, a cooler 45, an incident-side polarization plate 46, and an attachment member 47.

### Configuration of Liquid Crystal Panel

The liquid crystal panel 41 is a transmissive liquid crystal panel that modulates the colored light incident thereon and outputs the colored light thus modulated along the traveling direction of the colored light incident thereon. As illustrated in FIG. 7, the liquid crystal panel 41 includes a panel main body 411, a flexible printed circuit (FPC) 412, a holding frame 413, an incident-side heat dissipation member 414, and an exit-side heat dissipation member 415.

The panel main body 411 modulates the light incident thereon while the light passes through the inside of the panel main body 411. The panel main body 411 includes an optical action portion (not illustrated), an incident-side dustproof substrate 4111 illustrated in FIG. 7, and an exit-side dustproof substrate 4113 illustrated in FIG. 8, and the incident-side dustproof substrate 4111 and the exit-side dustproof substrate 4113 sandwich the optical action portion on the Z axis.

The optical action portion includes a liquid crystal layer, and an opposed substrate and a pixel substrate that sandwich the liquid crystal layer on the Z axis. The opposed substrate and the pixel substrate are coupled to the FPC 412, and change an arrangement state of the liquid crystal molecules forming the liquid crystal layer in accordance with the image signal supplied from the FPC412. Accordingly, the optical action portion modulates the incident light.

A contact portion 424 of the heat diffuser 42 is in contact with a plane of incidence of light 4112 of the incident-side dustproof substrate 4111 in a heat transferable manner.

As illustrated in FIG. 7, the FPC 412 extends from the panel main body 411 toward the +Y direction and is coupled to the control device 6. As illustrated in FIG.8, the FPC 412 includes a driver circuit 4121, which drives the optical action portion, and the driver circuit 4121 outputs, to the pixel substrate, a drive signal according to the image signal input from the control device 6.

The holding frame 413 holds the panel main body 411, the FPC 412, and each of the heat dissipation members 414, 415, and also supports the heat diffuser 42, the holding member 43, the thermoelectric conversion device 44, and the cooler 45. Further, the holding frame 413 supports the polarization unit 5A. As shown in FIGS. 7 and 8, the holding frame 413 is formed in a rectangular shape elongated in the Y axis when viewed from the light incident side or the light exit side. Although not illustrated, the holding frame 413 has an opening through which light incident on the panel main body 411 and light emitted from the panel main body 411 pass.

The holding frame 413 has four through holes 4131 penetrating the holding frame 413 along the Z axis. An arm portion of the support member described above and provided to the color combining device 346 is inserted into each of the four through holes 4131, whereby the liquid crystal panel 41 is supported by a support member.

The incident-side heat dissipation member 414 and the exit-side heat dissipation member 415 sandwich the driver circuit 4121 of the FPC 412 on the Z axis to dissipate the heat of the driver circuit 4121.

As illustrated in FIG. 7, the incident-side heat dissipation member 414 is attached to a surface of the holding frame 413 facing the -Z direction at a position at the +Y direction side with respect to the panel main body 411.

As illustrated in FIG. 8, the exit-side heat dissipation member 415 is attached to the surface of the holding frame 413 facing the +Z direction at the position at the +Y direction side.

### Configuration of Heat Diffuser

The heat diffuser 42 receives the heat of the panel main body 411 from the plane of incidence of light 4112 of the incident-side dustproof substrate 4111 and diffuses the heat thus received. As illustrated in FIG. 8, the heat diffuser 42 is formed in a substantially rectangular plate shape elongated in the Y axis when viewed from the +Z direction, and is disposed at the light incident side with respect to the liquid crystal panel 41. In a specific description, the heat diffuser 42 is disposed between the panel main body 411 and the thermoelectric conversion device 44 to transport the heat. That is, the heat diffuser 42 extends from the panel main body 411 along the Y axis, transfers heat between the heat diffuser 42 and the liquid crystal panel 41, and the heat received therein is diffused inside.

The heat diffuser 42 includes a first surface 421, a second surface 422, an opening 423, the contact portion 424, and an extending portion 425.

The first surface 421 is a surface of the heat diffuser 42 facing the panel main body 411 and the incident-side heat dissipation member 414. In other words, the first surface 421 is a surface at the light exit side in the heat diffuser 42.

The second surface 422 is a surface at an opposite side to the first surface 421 in the heat diffuser 42. The holding member 43 and the thermoelectric conversion device 44 described later are in contact with the second surface 422.

The opening 423 allows the light incident on the panel main body 411 to pass along the +Z direction when the heat diffuser 42 is attached to the holding frame 413.

The contact portion 424 is provided on the peripheral edge of the opening 423 on the first surface 421. The contact portion 424 makes contact with the plane of incidence of light 4112, which is a heat transfer surface, to receive the heat of the panel main body 411 from the plane of incidence of light 4112. Note that as long as the contact portion 424 can receive the heat of the panel main body 411, a position of a contact part of the panel main body 411 with the contact portion 424 is not particularly limited. For example, the contact portion 424 may make contact with a circumferential surface of the incident-side dustproof substrate 4111 along the circumferential direction around the Z axis.

The extending portion 425 is a portion of the heat diffuser 42 extending in a direction crossing a direction in which light is incident on the panel main body 411 from the opening 423. Specifically, the extending portion 425 is a portion extending from the opening 423 in the +Y direction crossing the +Z direction.

In the heat diffuser 42, the heat of the panel main body 411 received by the contact portion 424 on the periphery of the opening 423 is diffused to the extending portion 425. Then, the heat diffused to the extending portion 425 is absorbed by the thermoelectric conversion device 44 disposed at the second surface 422.

In the present embodiment, the heat diffuser 42 is a vapor chamber having a sealed housing in which a working fluid that can change between a gas phase and a liquid phase is sealed inside thereof. However, this is not a limitation, and the heat diffuser 42 may be a plate-shaped body formed of metal high in thermal conductivity.

### Configuration of Holding Member

As illustrated in FIGS. 7 and 8, the holding member 43 is formed in a substantially rectangular frame shape. The holding member 43 is fixed to the heat diffuser 42 from the -Z direction, and holds the incident-side polarization plate 46 at the light incident side with respect to the panel main body 411. The holding member 43 includes an opening 431 and two fixing portions 432.

The opening 431 is an opening that allows the light passing through the incident-side polarization plate 46 along the +Z direction to be incident on the panel main body 411 via the opening 423 of the heat diffuser 42.

The two fixing portions 432 are disposed at positions across the opening 431 in the X axis. The two fixing portions 432 protrude toward the -Z direction, and the attachment member 47 that holds the incident-side polarization plate 46 is fixed with an adhesive or the like.

### Configuration of Thermoelectric Conversion Device

The thermoelectric conversion device 44 is disposed at the light incident side with respect to the extending portion 425 of the heat diffuser 42, and is disposed between the heat diffuser 42 and the cooler 45 on the Z axis. The thermoelectric conversion device 44 is coupled to the extending portion 425 to transfer heat to and from the heat diffuser 42. Specifically, the thermoelectric conversion device 44 absorbs heat from the heat diffuser 42 and transfers heat to the heat diffuser 42. As illustrated in FIGS. 7 and 8, the thermoelectric conversion device 44 has a first surface 441 in contact with the extending portion 425 of the heat diffuser 42 and a second surface 442 in contact with the cooler 45.

Such a thermoelectric conversion device 44 actively absorbs, with the first surface 441, the heat transferred from the extending portion 425, and radiates, from the second surface 442 to the cooler 45, the heat thus absorbed.

In the present embodiment, the thermoelectric conversion device 44 is a Peltier element. Therefore, by reversing the polarity of the thermoelectric conversion device 44, heat can be supplied from the first surface 441 to the extending portion 425 to thereby heat the panel main body 411.

### Configuration of Cooler

The cooler 45 sandwiches the thermoelectric conversion device 44 with the heat diffuser 42, and transfers heat to and from the thermoelectric conversion device 44. The cooler 45 is configured such that a liquid refrigerant can flow inside, and radiates the heat transferred from the heat diffuser 42 via the thermoelectric conversion device 44 to the liquid refrigerant supplied via a pipe 80 described later. Specifically, the cooler 45 is a liquid-cooled jacket in which a plurality of fins through which the liquid refrigerant flows is disposed inside.

### Configuration of Incident-Side Polarization Plate and Attachment Member

The incident-side polarization plate 46 is a polarization plate disposed at the -Z direction side as the light incident side with respect to the liquid crystal panel 41. The incident-side polarization plate 46 is formed in a rectangular plate shape which covers a pixel region including the liquid crystal layer of the liquid crystal panel 41 at the -Z direction side.

The attachment member 47 is a member for attaching the incident-side polarization plate 46 to the holding member 43. The attachment member 47 is formed in a frame shape, and includes an opening 471 and two attachment portions 472.

The opening 471 is an opening through which the colored light incident on the incident-side polarization plate 46 passes.

The two attachment portions 472 are disposed at positions across the opening 471 on the X axis. Each of the two attachment portions 472 protrudes toward the +Z direction and is combined with the holding member 43 to attach the incident-side polarization plate 46 to the holding member 43.

### Configuration of Polarization Unit

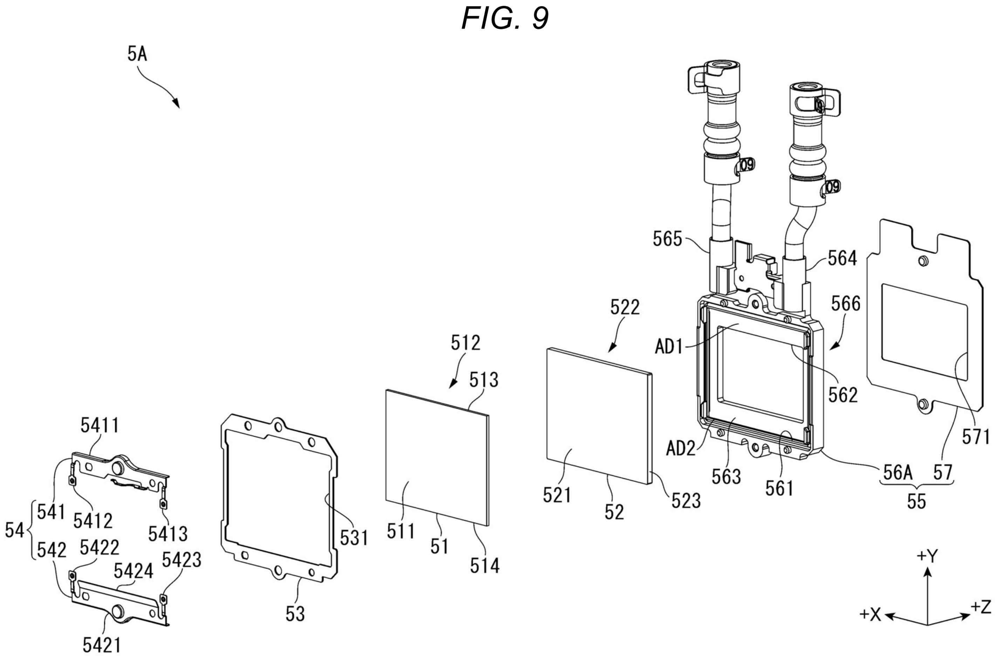

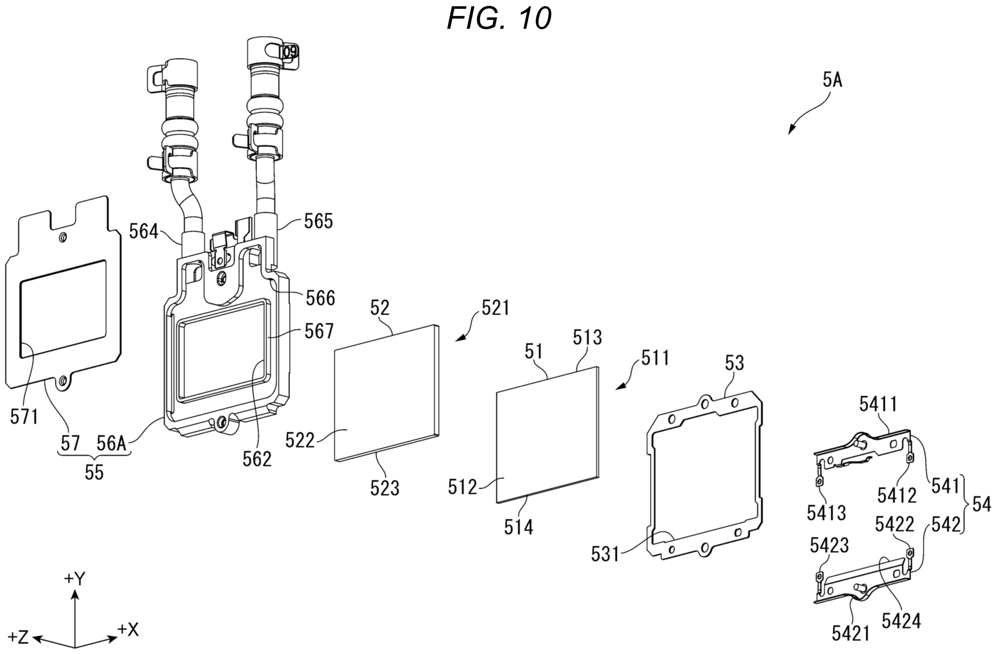

FIG. 9 is an exploded perspective view illustrating the polarization unit 5A viewed from the light incident side, and FIG. 10 is an exploded perspective view illustrating the polarization unit 5A viewed from the light exit side.

The polarization unit 5A is disposed at the +Z direction side, which is the exit side, with respect to the panel module 4A, and is combined with the holding frame 413 of the panel module 4A. As illustrated in FIGS. 9 and 10, the polarization unit 5A includes an exit-side polarization plate 51, a heat dissipation substrate 52, a frame body 53, a biasing member 54, and a cold plate 55.

### Configuration of Exit-Side Polarization Plate

The exit-side polarization plate 51 is a polarization plate that is located at the +Z direction side, which is the light exit side, with respect to the liquid crystal panel 41, and on which light emitted from the panel module 4A including the liquid crystal panel 41 is incident. The exit-side polarization plate 51 sandwiches the panel main body 411 of the liquid crystal panel 41 on the Z axis with the incident-side polarization plate 46. Similarly to the incident-side polarization plate 46, the exit-side polarization plate 51 is also formed in a rectangular plate shape covering the pixel region of the panel main body 411 at the +Z direction side. In a specific description, the exit-side polarization plate 51 is formed to be larger than the pixel region when viewed from the -Z direction.

The exit-side polarization plate 51 has a first surface 511 on which light is incident and a second surface 512 from which light is emitted. In other words, the exit-side polarization plate 51 has the second surface 512 facing the heat dissipation substrate 52 and the first surface 511 as an opposite surface to the second surface 512.

Although not illustrated, a plurality of wire grids along the Y axis are arranged along the X axis at the first surface 511. Therefore, the wire grid is not in contact with the heat dissipation substrate 52.

### Configuration of Heat Dissipation Substrate

The heat dissipation substrate 52 is in heat transferable contact with the exit-side polarization plate 51, and transfers, to the cold plate 55, the heat transferred from the exit-side polarization plate 51. The heat dissipation substrate 52 is disposed at the +Z direction side with respect to the exit-side polarization plate 51, and is disposed in a housing recess 561 of a plate main body 56A constituting the cold plate 55 together with the exit-side polarization plate 51.

The heat dissipation substrate 52 has a first surface 521 facing the -Z direction and a second surface 522 facing the +Z direction. In other words, the heat dissipation substrate 52 has the first surface 521 facing the exit-side polarization plate 51 and the second surface 522 that is a surface at an opposite side to the first surface 521 and faces the cold plate 55. The first surface 521 is thermally coupled to the first surface 511 of the exit-side polarization plate 51. In a specific description, the first surface 521 is in surface contact with the first surface 511.

Further, the heat dissipation substrate 52 has a third surface 523 that crosses each of the first surface 521 and the second surface 522. The third surface 523 is configured with a side surface facing the ±X direction and a side surface facing the ±Y direction in the heat dissipation substrate 52.

The thermal conductivity of the heat dissipation substrate 52 is equal to or higher than the thermal conductivity of the exit-side polarization plate 51. Such a heat dissipation substrate 52 is a light-transmissive substrate and is made of, for example, sapphire.

The size of the heat dissipation substrate 52 when viewed from the -Z direction coincides with the size of the exit-side polarization plate 51 when viewed from the -Z direction. That is, the dimension of the heat dissipation substrate 52 along the X axis is the same as the dimension of the exit-side polarization plate 51 along the X axis, and the dimension of the heat dissipation substrate 52 along the Y axis is the same as the dimension of the exit-side polarization plate 51 along the Y axis. However, this is not a limitation, and the size of the heat dissipation substrate 52 may be smaller than the size of the exit-side polarization plate 51 or may be larger than the size of the exit-side polarization plate 51.

### Configuration of Frame Body

The frame body 53 is disposed at the -Z direction side, which is the light incident side, with respect to the exit-side polarization plate 51. The frame body 53 is fixed to the plate main body 56A from the -Z direction and surrounds the exit-side polarization plate 51 when viewed from the -Z direction. The frame body 53 has an opening 531 through which the colored light incident on the exit-side polarization plate 51 passes.

### Configuration of Biasing Member

The biasing member 54 is fixed to the plate main body 56A via the frame body 53, and biases the exit-side polarization plate 51 and the heat dissipation substrate 52 toward the plate main body 56A. The biasing member 54 includes a first biasing member 541 disposed at the +Y direction side and a second biasing member 542 disposed at the -Y direction side.

The first biasing member 541 is disposed along an end edge at the +Y direction side out of end edges along the X axis in the exit-side polarization plate 51. The first biasing member 541 includes an extending portion 5411 extending along the X axis and contact portions 5412, 5413.

The contact portion 5412 extends toward the -Y direction from an end portion at the +X direction side of the extending portion 5411, and the contact portion 5413 extends toward the -Y direction from an end portion at the -X direction side of the extending portion 5411.

The second biasing member 542 is disposed along an end edge at the -Y direction side out of the end edges along the X axis in the exit-side polarization plate 51. The second biasing member 542 includes an extending portion 5421 extending along the X axis, contact portions 5422, 5423, and a cover portion 5424. The contact portion 5422 extends toward the +Y direction from an end portion at the +X direction side of the extending portion 5421, and the contact portion 5423 extends toward the +Y direction from an end portion at the -X direction side of the extending portion 5421.

Each of the contact portions 5412, 5413 of the first biasing member 541 and the contact portions 5422, 5423 of the second biasing member 542 is in contact with the second surface 512 of the exit-side polarization plate 51 at a position where light is not incident on the second surface 512. Further, each of the contact portions 5412, 5413, 5422, and 5423 biases the exit-side polarization plate 51 and the heat dissipation substrate 52 toward the plate main body 56A.

The cover portion 5424 is located between the contact portions 5422, 5423 and protrudes toward the +Y direction from the extending portion 5421. When the second biasing member 542 is fixed to the plate main body 56A, the cover portion 5424 covers, at the -Z direction side, an end edge 514 located at the -Y direction side out of end edges 513, 514 crossing the +Y direction in which the wire grid extends in the exit-side polarization plate 51. In a specific description, the cover portion 5424 covers, at the -Z direction side, an area of the end edge 514 corresponding to the incident region on which the colored light is incident in the exit-side polarization plate 51.

By such a cover portion 5424 covering the area described above of the end edge 514, moisture containing dirt is prevented from entering the wire grid from the end edge 514.

Note that it is possible to adopt a configuration in which a cover portion similar to the cover portion 5424 is provided to the first biasing member 541, and the cover portion covers, at the -Z direction side, an area of the end edge 513 corresponding to the light incident region in the exit-side polarization plate 51.

### Configuration of Cold Plate

The cold plate 55 dissipates, to the liquid refrigerant flowing inside, the heat transferred from the exit-side polarization plate 51 via the heat dissipation substrate 52 to thereby cool the exit-side polarization plate 51. The cold plate 55 includes the plate main body 56A and a lid member 57.

Out of these components, the lid member 57 is a plate-shaped member that is disposed at the +Z direction side, which is the light exit side, with respect to the plate main body 56A to be combined with the plate main body 56A. In a specific description, the lid member 57 closes, at the +Z direction side, the flow path of the liquid refrigerant provided to the plate main body 56A. The lid member 57 has an opening 571 through which the light having passed through the exit-side polarization plate 51 can pass, and the opening 571 penetrates the lid member 57 along the Z axis.

The plate main body 56A constitutes a main body portion of the cold plate 55. The plate main body 56A holds the exit-side polarization plate 51 and the heat dissipation substrate 52, and forms a flow path inside through which the liquid refrigerant flows. The plate main body 56A includes a circulation portion 566 and a protruding frame portion 567 illustrated in FIG. 10 in addition to the housing recess 561, an opening 562, a coupling portion 563, a supply portion 564, and a discharge portion 565 illustrated in FIG. 9.

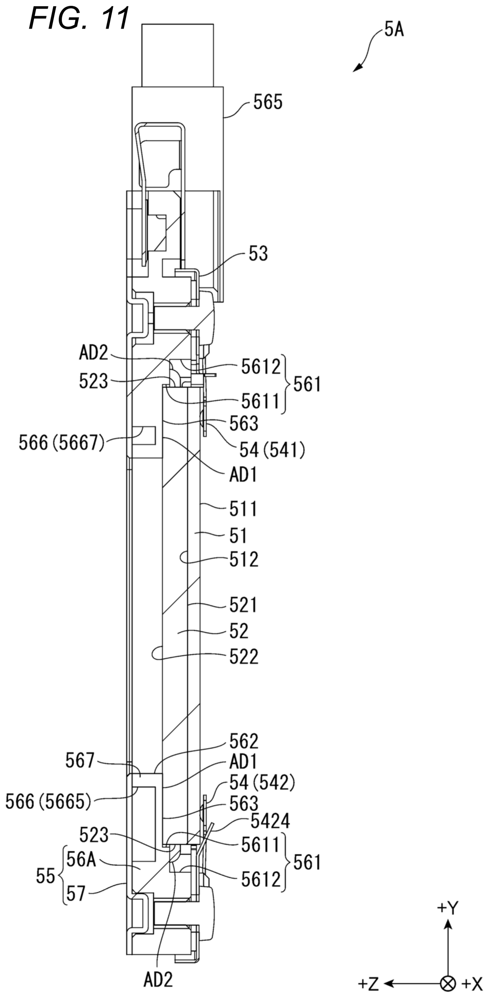

FIG. 11 is a diagram illustrating a cross-section of the polarization unit 5A along the Y-Z plane.

As illustrated in FIGS. 9 and 11, the housing recess 561 is a recess recessed toward the +Z direction from a surface facing the -Z direction in the plate main body 56A, and is formed in a rectangular shape when viewed from the -Z direction. In a specific description, as shown in FIG. 11, the housing recess 561 is a two-step recess having a first recess 5611 and a second recess 5612, and the first recess 5611 is disposed inside the second recess 5612. The exit-side polarization plate 51 and the heat dissipation substrate 52 are disposed in the first recess 5611. Therefore, the side surfaces at the ±X direction sides and the side surfaces at the ±Y direction sides of each of the exit-side polarization plate 51 and the heat dissipation substrate 52 are covered with the inner side surfaces of the housing recess 561.

As shown in FIGS. 9 and 11, the opening 562 is disposed at a bottom portion of the first recess 5611 and penetrates the plate main body 56A along the Z axis. The opening 562 is an opening which is formed in a rectangular shape when viewed along the Z axis, and through which the colored light having passed through the exit-side polarization plate 51 and the heat dissipation substrate 52 passes. When the plate main body 56A and the lid member 57 are combined with each other, the openings 562, 571 constitute an opening penetrating the cold plate 55 along the Z axis.

The coupling portion 563 is a portion around the opening 562 at the bottom portion of the housing recess 561. That is, the coupling portion 563 is a surface facing the -Z direction in each of the first recess 5611 and the second recess 5612.

As shown in FIG. 11, the coupling portion 563 is thermally coupled to the second surface 522 of the heat dissipation substrate 52. In a specific description, the coupling portion 563 is thermally coupled to the outer peripheral portion of the second surface 522 of the heat dissipation substrate 52. That is, the coupling portion 563 is coupled to the outer peripheral portion located outside a region of the second surface 522 through which light passes. Accordingly, the heat of the exit-side polarization plate 51 is transferred to the coupling portion 563 via the second surface 522, and the heat of the exit-side polarization plate 51 is diffused to the plate main body 56A via the coupling portion 563.

As shown in FIG. 11, the heat dissipation substrate 52 is adhesively fixed to the plate main body 56A with a first adhesive AD1 and a second adhesive AD2.

The first adhesive AD1 is applied to the coupling portion 563 to adhesively fix the heat dissipation substrate 52 to the coupling portion 563. The first adhesive AD1 is preferably, for example, an adhesive which is high in thermal conductivity and has viscosity that allows to be thinly applied. As such a first adhesive AD1, a silicone adhesive containing a filler such as alumina or quartz-crystalline silica can be adopted.

The second adhesive AD2 is disposed across a bottom portion of the second recess 5612 and the third surface 523 of the heat dissipation substrate 52 so as to surround the heat dissipation substrate 52 when viewed from the -Z direction, and fixes the heat dissipation substrate 52. In a specific description, the second adhesive AD2 is disposed across the third surface 523 which crosses each of the first surface 521 and the second surface 522 in the heat dissipation substrate 52 and the bottom portion of the second recess 5612. Examples of the second adhesive AD2 include an adhesive containing polyurethane resin having elasticity and modified silicone. The second adhesive AD2 may be disposed across the coupling portion 563 and a side surface of the heat dissipation substrate 52.

Here, when a silicone adhesive is adopted as the first adhesive AD1, an organic silicone gas containing low-molecular-weight siloxane may be generated as an outgas from the first adhesive AD1 in some cases. When such an outgas adheres to a region through which light passes between the exit-side polarization plate 51 and the heat dissipation substrate 52, there is a possibility that fogging occurs. When such fogging occurs, a part of the light passing between the exit-side polarization plate 51 and the heat dissipation substrate 52 is absorbed, and thus, the amount of light emitted is reduced, and the temperature of the exit-side polarization plate 51 is likely to increase due to heat generation.

In contrast, since the second adhesive AD2 is disposed across the third surface 523 of the heat dissipation substrate 52 and the bottom portion of the second recess 5612, even when the outgas is generated from the first adhesive AD1, the second adhesive AD2 can suppress the outgas from leaking to the outside of the heat dissipation substrate 52 when viewed from the +Z direction. Therefore, since it is possible to suppress the outgas from entering an area between the exit-side polarization plate 51 and the heat dissipation substrate 52, it is possible to suppress an occurrence of the fogging, and thus it is possible to suppress the reduction in the amount of light emitted from the first light modulation module 343 and a rise in temperature of the exit-side polarization plate 51.

The supply portion 564 and the discharge portion 565 illustrated in FIGS. 9 and 10 protrude toward the +Y direction.

The pipe 80 described later is coupled to the supply portion 564 to supply the liquid refrigerant to the circulation portion 566. The discharge portion 565 is disposed at the +X direction side with respect to the supply portion 564. The pipe 80 described later is coupled to the discharge portion 565, and the liquid refrigerant having flowed through the circulation portion 566 is discharged to the pipe 80.

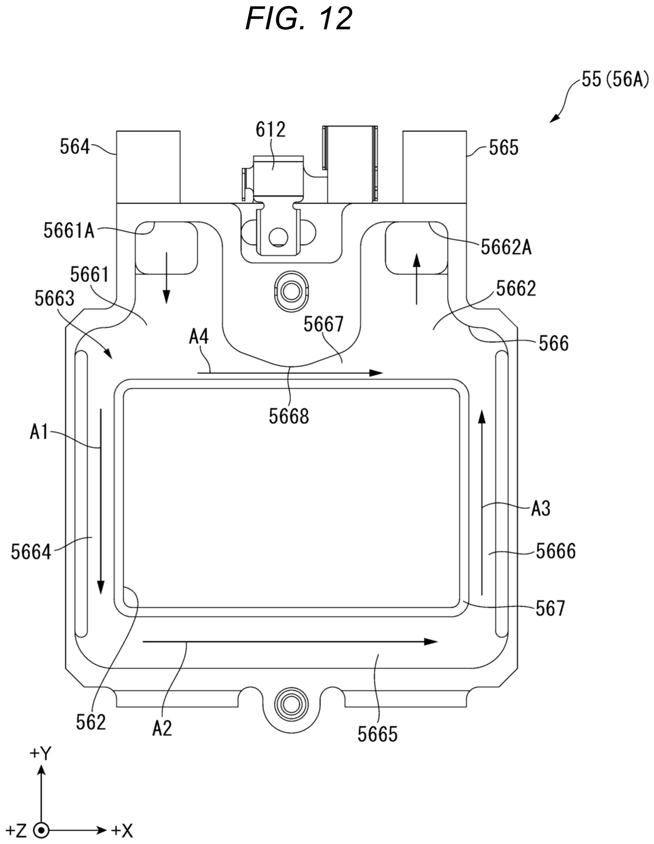

FIG. 12 is a diagram illustrating the circulation portion 566 of the plate main body 56A viewed from the +Z direction.

The circulation portion 566 is a recess recessed toward the -Z direction from a surface facing the +Z direction in the plate main body 56A, and is a portion through which the liquid refrigerant supplied from the supply portion 564 and then discharged from the discharge portion 565 circulates. That is, the circulation portion 566 is a portion that dissipates, to the liquid refrigerant circulating therethrough, the heat of the exit-side polarization plate 51 transferred to the coupling portion 563. As illustrated in FIG. 12, the circulation portion 566 includes a first communication portion 5661, a second communication portion 5662, a flow path 5663, and a resistive portion 5668.

The first communication portion 5661 has a first communication port 5661A communicating with the supply portion 564. The first communication portion 5661 introduces the liquid refrigerant from the supply portion 564 to the flow path 5663 via the first communication port 5661A.

The second communication portion 5662 has a second communication port 5662A communicating with the discharge portion 565. The second communication portion 5662 discharges, to the discharge portion 565 via the second communication port 5662A, the liquid refrigerant having flowed through the flow path 5663.

The flow path 5663 is a portion which is disposed around the opening 562 and through which the liquid refrigerant supplied from the first communication portion 5661 flows toward the second communication portion 5662. The flow path 5663 is formed in a shape obtained by combining a U-shape and a rectangular shape with each other when viewed from the +Z direction. That is, the flow path 5663 includes a first extending portion 5664, a second extending portion 5665, a third extending portion 5666, and a fourth extending portion 5667, and is configured with these extending portions 5664 to 5667.

The first extending portion 5664 communicates with the first communication portion 5661 and extends toward the -Y direction from the first communication portion 5661.

The second extending portion 5665 extends along the X axis from an end portion at the -Y direction side of the first extending portion 5664.

The third extending portion 5666 extends toward the +Y direction from the second extending portion 5665 to communicate with the second communication portion 5662.

The fourth extending portion 5667 extends toward the +X direction from the first communication portion 5661 to communicate with the second communication portion 5662.

The resistive portion 5668 is a portion that increases the flow path resistance of the liquid refrigerant in the fourth extending portion 5667. In the present embodiment, the resistive portion 5668 is configured such that an inner surface facing the -Y direction out of inner surfaces of the circulation portion 566 constituting the fourth extending portion 5667 protrudes toward the -Y direction. Such a resistive portion 5668 constitutes a narrow portion that narrows the flow path width of the fourth extending portion 5667.

The protruding frame portion 567 protrudes from a surface facing the +Z direction of the circulation portion 566 to form an inner edge of the opening 562. The protruding frame portion 567 constitutes a part of an inner surface forming the flow path 5663 in the plate main body 56A.

### Liquid Refrigerant Flowing Through Circulation Portion

The liquid refrigerant supplied from the supply portion 564 via the first communication portion 5661 is divided into a first liquid refrigerant flowing along the first extending portion 5664 and a second liquid refrigerant flowing along the fourth extending portion 5667.

As indicated by an arrow A1 in FIG. 12, the first liquid refrigerant flows toward the -Y direction along the first extending portion 5664 from the first communication portion 5661. The first liquid refrigerant having flowed along the first extending portion 5664 flows toward the +X direction along the second extending portion 5665 as indicated by an arrow A2. Then, the first liquid refrigerant having flowed along the second extending portion 5665 flows toward the +Y direction along the third extending portion 5666 as indicated by an arrow A3, and then flows to the discharge portion 565 via the second communication portion 5662.

The second liquid refrigerant flows toward the +X direction along the fourth extending portion 5667 as indicated by an arrow A4. The second liquid refrigerant having flowed along the fourth extending portion 5667 merges with the first liquid refrigerant having flowed along the third extending portion 5666, and flows to the discharge portion 565 via the second communication portion 5662.

As described above, the circulation portion 566 of the cold plate 55 is provided with the first flow path of the first liquid refrigerant flowing along the extending portions 5664 to 5666 and the second flow path of the second liquid refrigerant flowing along the fourth extending portion 5667.

Here, when the flow path resistance of the second liquid refrigerant in the fourth extending portion 5667 is low, the flow rate of the second liquid refrigerant flowing along the fourth extending portion 5667 is higher than the flow rate of the first liquid refrigerant flowing along the first extending portion 5664. That is, when the flow path resistance of the second liquid refrigerant in the fourth extending portion 5667 is low, it is difficult for the liquid refrigerant to flow through the first flow path configured with the extending portions 5664 to 5666, and the heat dissipation efficiency of the heat transferred from the exit-side polarization plate 51 to the liquid refrigerant, and by extension, the cooling efficiency of the exit-side polarization plate 51 decrease.

In contrast, since the resistive portion 5668 is provided to the fourth extending portion 5667, the flow path resistance of the liquid refrigerant along the fourth extending portion 5667 is higher than the flow path resistance of the liquid refrigerant along the extending portions 5664 to 5666. Accordingly, the liquid refrigerant supplied to the flow path 5663 can be made easy to flow through the extending portions 5664 to 5666, and a pressure loss can be reduced. Therefore, since it is possible to easily circulate the liquid refrigerant through the entire flow path 5663, it is possible to increase the heat dissipation efficiency of the heat of the exit-side polarization plate 51 to the liquid refrigerant, and by extension, it is possible to increase the cooling efficiency of the exit-side polarization plate 51.

### Configuration of Second Light Modulation Module

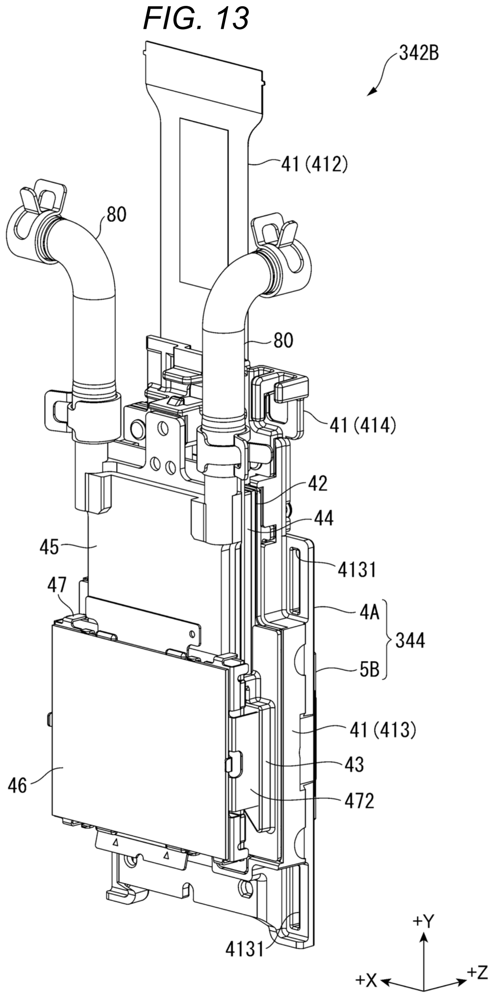

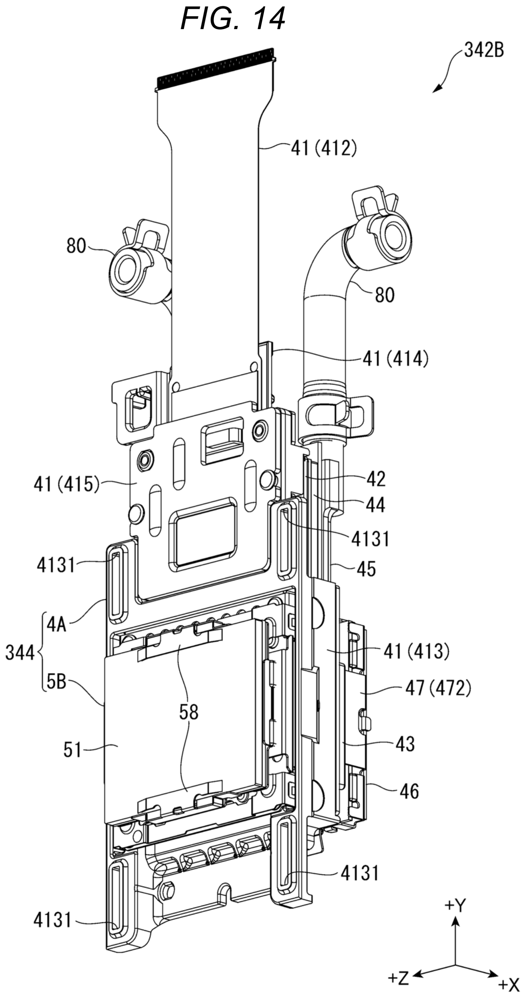

FIG. 13 is a perspective view illustrating the second light modulation module 344 viewed from the light incident side, and FIG. 14 is a perspective view illustrating the second light modulation module 344 viewed from the light exit side.

Similarly to the first light modulation module 343, the second light modulation module 344 modulates incident light. In the present embodiment, the second light modulation module 344 forms the blue light modulation element 342B and modulates the blue light incident thereon. As illustrated in FIGS. 13 and 14, the second light modulation module 344 includes the panel module 4A and the polarization unit 5B, and is configured with the panel module 4A and the polarization unit 5B combined with each other. Note that since a configuration of the panel module 4A provided to the second light modulation module 344 is substantially the same as the configuration of the panel module 4A provided to the first light modulation module 343, the description thereof will be omitted.

As illustrated in FIG. 14, the polarization unit 5B includes the exit-side polarization plate 51 and a fixing member 58 that fixes the exit-side polarization plate 51 to the holding frame 413 of the panel module 4A. That is, unlike the first light modulation module 343, the second light modulation module 344 does not include the cold plate 55.

### Configuration of Third light modulation module

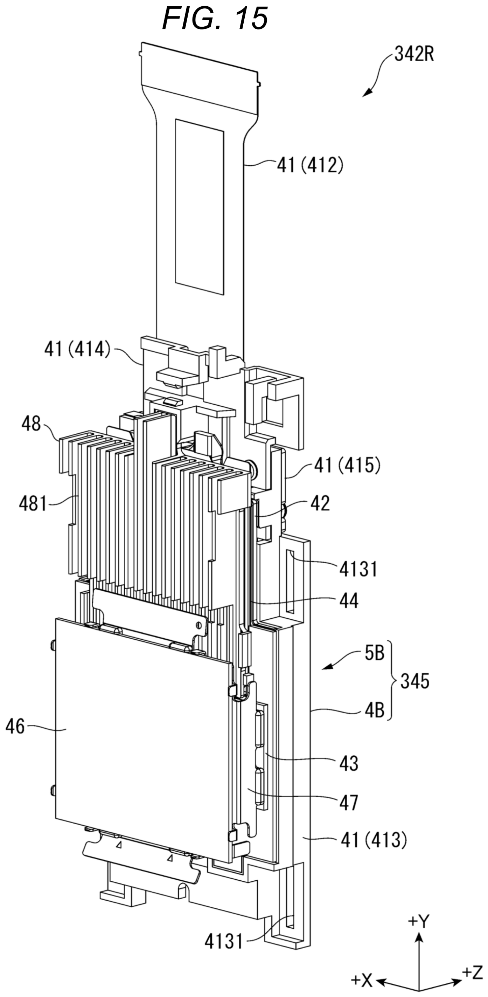

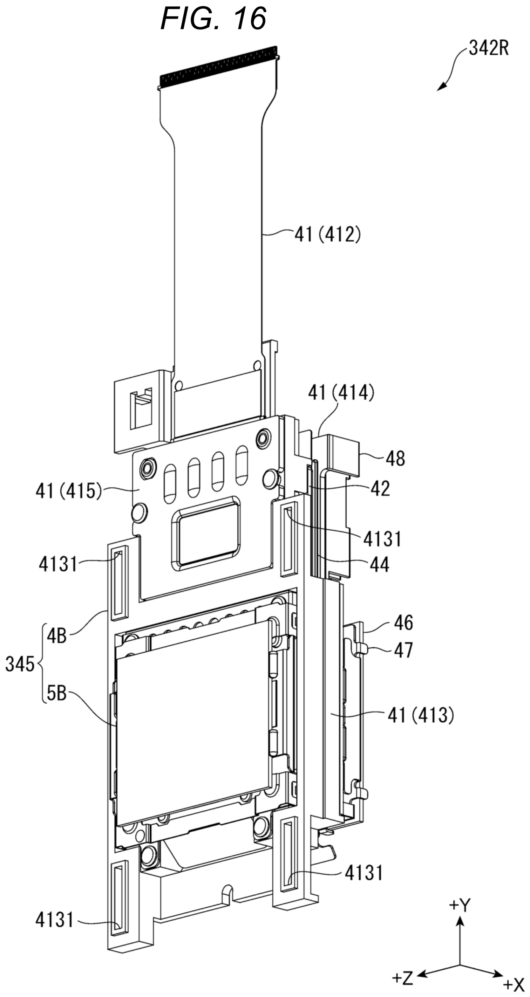

FIG. 15 is a perspective view illustrating the third light modulation module 345 viewed from the light incident side, and FIG. 16 is a perspective view illustrating the third light modulation module 345 viewed from the light exit side.

The third light modulation module 345 modulates incident light similarly to the light modulation modules 343, 344. In the present embodiment, the third light modulation module 345 constitutes the red light modulation element 342R and modulates the red light incident thereon. As illustrated in FIGS. 15 and 16, the third light modulation module 345 includes the panel module 4B and the polarization unit 5B, and is configured with the panel module 4B and the polarization unit 5B combined with each other. Note that since a configuration of the polarization unit 5B provided to the third light modulation module 345 is substantially the same as the configuration of the polarization unit 5B provided to the second light modulation module 344, the description thereof will be omitted.

As illustrated in FIG. 15, the panel module 4B has substantially the same configuration and function as those of the panel module 4A except that a cooler 48 is provided instead of the cooler 45. That is, the panel module 4B does not include the cooler 45 through which the liquid refrigerant can flow.

The cooler 48 is a heat sink having a plurality of fins 481 which extends along the Y-Z plane and is arranged along the X axis. Such a heat sink is configured such that a cooling gas easily flows toward the +Y direction along each of the fins 481.

As described above, unlike the first light modulation module 343, the third light modulation module 345 does not include the cooler 45 and the cold plate 55 through which the liquid refrigerant can flow.

### Configuration of Light Modulation Module Corresponding to Each Colored Light

Hereinafter, for the sake of convenience of description, the liquid crystal panel 41 and the exit-side polarization plate 51 constituting the blue light modulation element 342B are referred to as a blue panel and a blue exit-side polarization plate, the liquid crystal panel 41 and the exit-side polarization plate 51 constituting the green light modulation element 342G are referred to as a green panel and a green exit-side polarization plate, and the liquid crystal panel 41 and the exit-side polarization plate 51 constituting the red light modulation element 342R are referred to as a red panel and a red exit-side polarization plate.

As described above, the light source device 31 includes the light emitting element SS that emits the blue light as the excitation light and the wavelength conversion device 319 that converts a part of the blue light emitted from the light emitting element SS into the fluorescence, and emits the white illumination light obtained by combining the fluorescence emitted from the wavelength conversion device 319 and another part of the blue light emitted from the light emitting element SS with each other. The proportion of the green light in such illumination light is higher than the proportion of the blue light and is higher than the proportion of the red light. That is, the amount of green light in the illumination light is larger than the amount of blue light and is larger than the amount of red light. Therefore, a high cooling efficiency is required for the green panel and the green exit-side polarization plate. To cope with this request, the green light modulation element 342G is configured with the first light modulation module 343 including the cooler 45 and the cold plate 55.

The blue panel on which the blue light contained in the illumination light described above is incident is likely to deteriorate, but the blue exit-side polarization plate on which the blue light is incident is not so much deteriorated as the green exit-side polarization plate is deteriorated. Therefore, a high cooling efficiency is required for the blue panel, but such a high cooling efficiency is not required for the blue exit-side polarization plate. Taking the above into consideration, the blue light modulation element 342B is formed of the second light modulation module 344 which has the cooler 45 but does not have the cold plate 55.

The proportion of the red light contained in the illumination light described above is lower than the proportion of the green light and is lower than the proportion of the blue light. Therefore, such a high cooling efficiency is not required for the red panel and the red exit-side polarization plate on which the red light is incident. In contrast, the red light modulation element 342R is configured with the third light modulation module 345 which does not include each of the cooler 45 and the cold plate 55.

### Configuration of Cooling Device

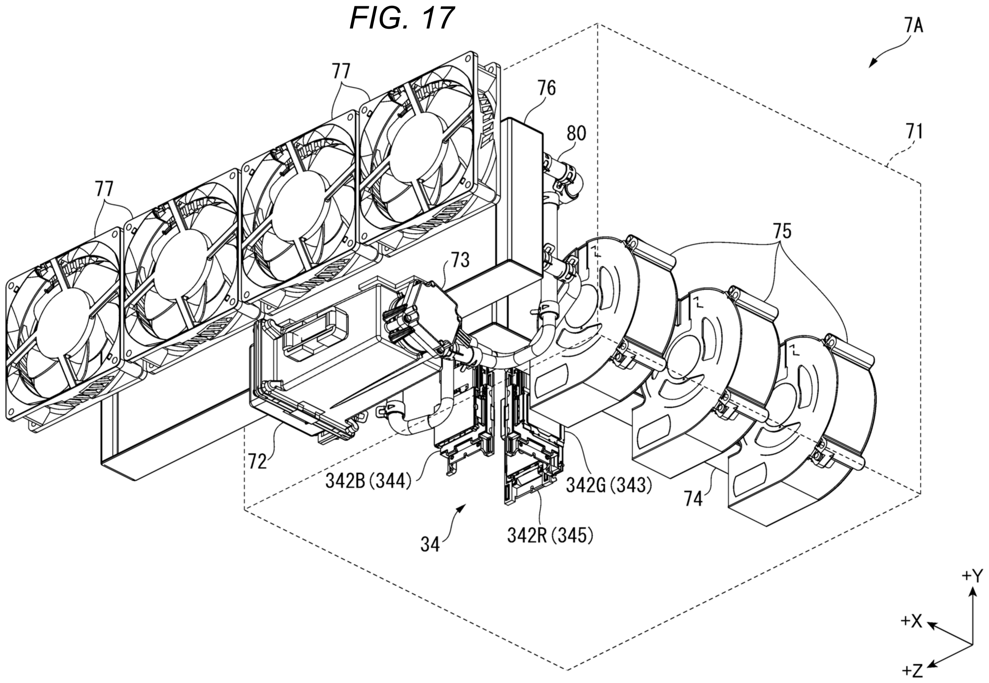

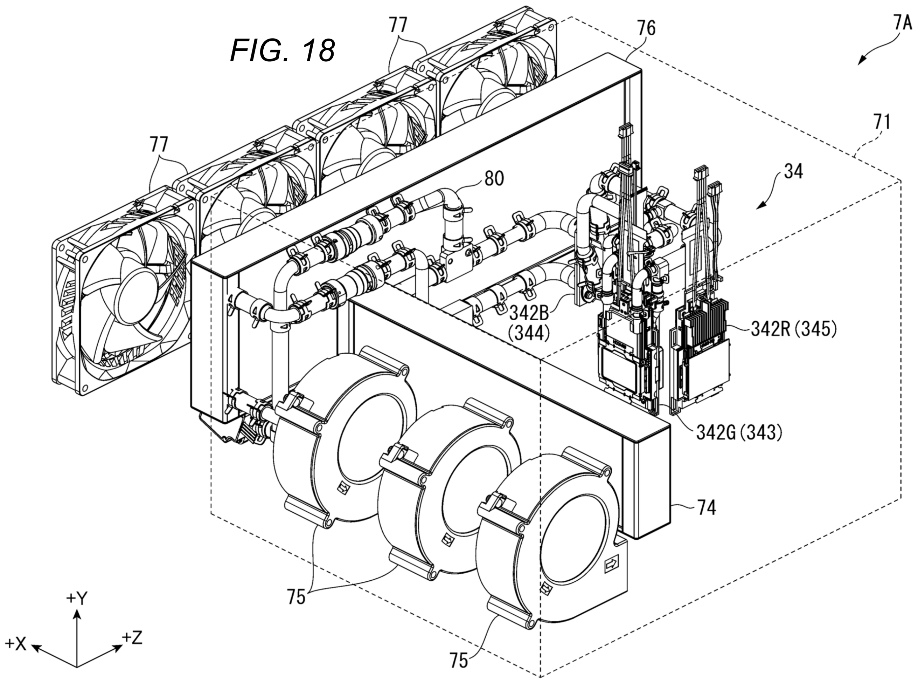

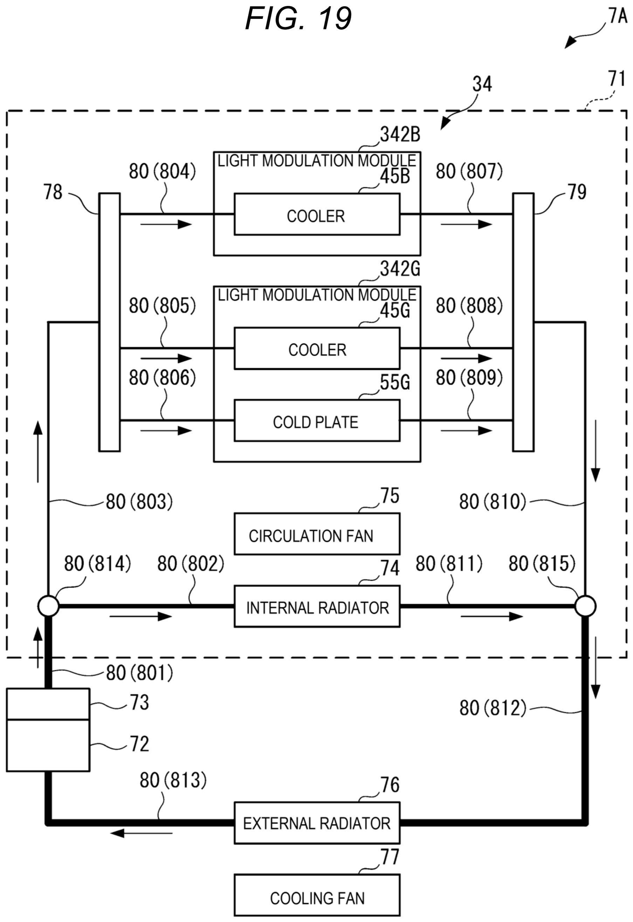

FIG. 17 is a perspective view illustrating an overall configuration of the cooling device 7A. FIG. 18 is a perspective view illustrating an overall configuration of the cooling device 7A with the sealed housing 71 not illustrated. FIG. 19 is a schematic diagram illustrating a configuration of the cooling device 7A.

The cooling device 7A cools the cooling target in the projector 1A as described above. For example, the cooling device 7A cools the light modulation elements 342B, 342G, and 342R. Specifically, the cooling device 7A circulates the liquid refrigerant through the cooler 45 constituting the blue light modulation element 342B and the cooler 45 and the cold plate 55 constituting the green light modulation element 342G to thereby cool the blue panel, the green panel, and the green exit-side polarization plate. Further, the cooling device 7A circulates the cooling gas to cool the polarization conversion element 325 shown in FIG. 1 in addition to the light modulation elements 342B, 342G, and 342R.

The cooling device 7A includes a sealed housing 71, a tank 72, a pump 73, an internal radiator 74, circulation fans 75, an external radiator 76, cooling fans 77, and the pipe 80 illustrated in FIGS. 17 to 19, and further includes a flow divider 78 and a merging section 79 illustrated in FIG. 19. Note that the thermoelectric conversion devices 44, the coolers 45, and the cold plate 55 also constitute the cooling device 7A.

Hereinafter, the cooler 45 constituting the blue light modulation element 342B is referred to as a cooler 45B, the cooler 45 constituting the green light modulation element 342G is referred to as a cooler 45G, and the cold plate 55 constituting the green light modulation element 342G is referred to as a cold plate 55G.

### Configuration of Pipe

First, the pipe 80 will be described.

The pipe 80 couples the tank 72, the pump 73, the internal radiator 74, the external radiator 76, the flow divider 78, the merging section 79, the cooler 45B, the cooler 45G, and the cold plate 55G to each other such that the liquid refrigerant can flow therethrough. The pipe 80 includes a plurality of pipes 801 to 813 and further includes joints 814, 815.

The pipe 801 couples the pump 73 and the joint 814 to each other. The pipe 802 couples the joint 814 and the internal radiator 74 to each other. The pipe 803 couples the joint 814 and the flow divider 78 to each other. Note that among the pipes 801 to 803, the pipe 801 is the thickest, and the pipe 803 is the thinnest. Therefore, in the flow rate of the liquid refrigerant flowing from the pipe 801 to the joint 814, the flow rate of the liquid refrigerant flowing through the pipe 802 is higher than the flow rate of the liquid refrigerant flowing through the pipe 803.

The pipe 804 couples the flow divider 78 and the cooler 45B to each other. The pipe 805 couples the flow divider 78 and the cooler 45G to each other. The pipe 806 couples the flow divider 78 and the cold plate 55G to each other. The pipe 806 corresponds to a supply pipe that supplies the liquid refrigerant flowing through the circulation portion 566 of the cold plate 55G. Note that the flow divider 78 divides the liquid refrigerant flowing from the pipe 803 into the pipes 804 to 806. At this time, the flow divider 78 may adjust the proportion of the liquid refrigerant flowing through each of the pipes 804 to 806 under the control of the control device 6.

As described above, in the flow paths of the liquid refrigerant, the internal radiator 74 and the flow divider 78 are coupled in parallel to each other with respect to the pump 73. The cooler 45B, the cooler 45G, and the cold plate 55G are coupled in parallel to each other with respect to the flow divider 78. That is, the internal radiator 74, the cooler 45B, the cooler 45G, and the cold plate 55G are coupled in parallel to each other with respect to the pump 73.

The pipe 807 couples the cooler 45B and the merging section 79 to each other. The pipe 808 couples the cooler 45G and the merging section 79 to each other. The pipe 809 couples the cold plate 55G and the merging section 79 to each other. The pipe 809 corresponds to a discharge pipe through which the liquid refrigerant having flowed through the circulation portion 566 of the cold plate 55G is discharged. The pipe 810 couples the merging section 79 and the joint 815 to each other. Note that the merging section 79 discharges, to the pipe 810, the liquid refrigerant merged from the pipes 807 to 809.

The pipe 811 couples the internal radiator 74 and the joint 815 to each other. The pipe 812 couples the joint 815 and the external radiator 76 to each other. The pipe 813 couples the external radiator 76 and the tank 72 to each other.

Note that the pipes 804 to 809 are each formed of a bellows tube in consideration of ease of coupling between the members. However, this is not a limitation, and at least one of the pipes 804 to 809 may be formed of a bellows tube.

### Configuration of Sealed Housing

The sealed housing 71 is configured as a housing difficult for dust to enter. As illustrated in FIGS. 17 to 19, the sealed housing 71 houses the internal radiator 74 and the circulation fans 75, and in addition houses a part of the image projection device 3 including the image forming device 34. That is, the sealed housing 71 houses at least the light modulation elements 342B, 342G, and 342R inside.

Although described later in detail, the circulation fans 75 disposed in the sealed housing 71 circulate the cooling gas to each of the light modulation elements 342R, 342G, and 342B in the process of circulating the cooling gas in the sealed housing 71 cooled by the internal radiator 74.

Note that the cooling gas in the sealed housing 71 is a gas refrigerant such as helium gas, but is not limited thereto, and may be other gases such as air.

### Configuration of Tank and Pump

The tank 72 temporarily stores the liquid refrigerant.

The pump 73 delivers the liquid refrigerant stored in the tank 72 to the pipe 801. In the present embodiment, the tank 72 and the pump 73 are integrated with each other. However, this is not a limitation, and the tank 72 and the pump 73 may be separated from each other.

A part of the liquid refrigerant delivered from the pump 73 flows to the internal radiator 74 via the pipe 802, and the rest of the liquid refrigerant flows to the flow divider 78 via the pipe 803. Out of the liquid refrigerant having flowed through the flow divider 78, the liquid refrigerant flowing through the pipe 804 flows through the cooler 45B to cool the blue panel, the liquid refrigerant flowing through the pipe 805 flows through the cooler 45G to cool the green panel, and the liquid refrigerant flowing through the pipe 806 flows through the cold plate 55G to cool the green exit-side polarization plate.

### Configuration of Internal Radiator and Circulation Fans

The internal radiator 74 is a heat exchanger that cools the cooling gas in the sealed housing 71 by transferring heat received from the cooling gas in the sealed housing 71 to the liquid refrigerant inflowing from the pipe 802.

The circulation fans 75 circulate the cooling gas in the sealed housing 71. The circulation fans 75 are disposed in the vicinity of the internal radiator 74, and the circulation fans 75 circulate the cooling gas in the sealed housing 71 by delivering the cooling gas cooled by the internal radiator 74.

### Configuration of External Radiator and Cooling Fans

The external radiator 76 and the cooling fans 77 are disposed outside the sealed housing 71.

The external radiator 76 cools the liquid refrigerant heated while flowing through the coolers 45B, 45G, the cold plate 55, and the internal radiator 74. In a specific description, the external radiator 76 receives heat from the liquid refrigerant inflowing from the joint 815 via the pipe 812, and transfers the heat thus received to the gas circulated by the cooling fans 77 to thereby cool the liquid refrigerant. The liquid refrigerant cooled by the external radiator 76 flows to the tank 72 via the pipe 813 and is stored in the tank 72.

As described above, the liquid refrigerant flows to the coolers 45B, 45G, the cold plate 55, and the internal radiator 74 with the pump 73, and is cooled by the external radiator 76, and then flows to each of the components once again by the pump 73 via the tank 72.

### Configuration of Control Device

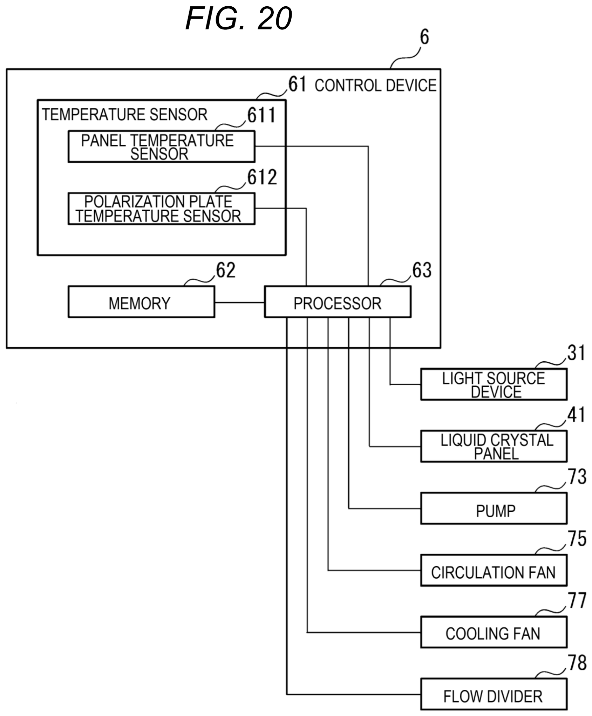

FIG. 20 is a block diagram showing a configuration of the control device 6.

The control device 6 controls an operation of the projector 1A. For example, the control device 6 controls lighting of the light source device 31, and further processes the image information input thereto to output an image signal according to the image information thus processed to the liquid crystal panels 41 of the respective light modulation elements 342B, 342G, and 342R.

Further, for example, the control device 6 controls the cooling device 7A. Therefore, as shown in FIG. 20, the control device 6 includes a temperature sensor 61, a memory 62, and a processor 63.

### Configuration of Temperature Sensor

The temperature sensor 61 includes panel temperature sensors 611 and a polarization plate temperature sensor 612.

The panel temperature sensors 611 each detect the temperature of the liquid crystal panel 41. The panel temperature sensors 611 are provided to the liquid crystal panels 41 constituting the light modulation elements 342B, 342G, and 342R, respectively. The panel temperature sensors 611 each output the temperature of the liquid crystal panel 41 thus detected to the processor 63. The panel temperature sensor 611 may be disposed upstream on the flow path of the cooling gas circulated by the circulation fan 75 in the liquid crystal panel 41, or may be disposed downstream on that flow path.

The polarization plate temperature sensor 612 is provided to the cold plate 55. The polarization plate temperature sensor 612 detects the temperature of the cold plate 55 as the temperature of the exit-side polarization plate 51. The polarization plate temperature sensor 612 outputs the temperature of the exit-side polarization plate 51 thus detected to the processor 63. As illustrated in FIG. 12, the polarization plate temperature sensor 612 is disposed in an end portion at the +Y direction side of the plate main body 56A. The cooling gas circulated by the circulation fan 75 circulates toward the +Y direction along the polarization unit 5A. Therefore, the polarization plate temperature sensor 612 is disposed downstream of the flow path of the cooling gas. However, this is not a limitation, and the polarization plate temperature sensor 612 may be disposed upstream of the flow path of the cooling gas in the cold plate 55, that is, in the end portion at the -Y direction side of the cold plate 55.

### Configuration of Memory and Processor

The memory 62 shown in FIG. 20 stores programs and data necessary for controlling the projector 1A.

The processor 63 is formed of an arithmetic processing device such as a central processing unit (CPU) and corresponds to a controller that controls operations of the projector 1A. The processor 63 controls the light source device 31 and the liquid crystal panels 41 of the respective light modulation elements 342B, 342G, and 342R to cause the image projection device 3 to form and project image light according to the image information.

Further, the processor 63 controls the pump 73, the circulation fans 75, the cooling fans 77, and the flow divider 78 based on the temperature of each of the liquid crystal panels 41 detected by the panel temperature sensor 611 and the temperature of the exit-side polarization plate 51 detected by the polarization plate temperature sensor 612.

For example, when the temperature of the liquid crystal panel 41 and the temperature of the exit-side polarization plate 51 exceeds the respective upper limits of the appropriate ranges, the processor 63 increases the delivery flow rate by the pump 73 and drives each of the circulation fans 75 and the cooling fans 77 at a high rotational speed.

Further, for example, when the temperature of the green exit-side polarization plate exceeds the upper limit of the appropriate range while the temperatures of the blue panel and the green panel are within the appropriate ranges, the processor 63 increases the delivery flow rate by the pump 73 and controls the flow divider 78 to make the flow rate of the liquid refrigerant flowing to the cold plate 55G through the pipe 806 higher than the flow rate of the liquid refrigerant flowing to the cold plate 55G when the temperature of the green exit-side polarization plate is within the appropriate range.

### Advantages of First Embodiment

The projector 1A according to the present embodiment described hereinabove provides the following advantages.

The projector 1A includes the first light modulation module 343 constituting the green light modulation element 342G, the light source device 31 that emits the light to be incident on the first light modulation module 343, and the projection optical device 35 that projects the light modulated by the first light modulation module 343.

The first light modulation module 343 corresponds to a light modulation module of the present disclosure. The first light modulation module 343 includes the panel module 4A, the exit-side polarization plate 51, the heat dissipation substrate 52, and the cold plate 55.

The panel module 4A modulates the incident light.

The exit-side polarization plate 51 corresponds to a polarization plate of the present disclosure. The light emitted from the panel module 4A is incident on the exit-side polarization plate 51.

The heat dissipation substrate 52 has the thermal conductivity equal to or higher than the thermal conductivity of the exit-side polarization plate 51. The heat dissipation substrate 52 has the first surface 521 thermally coupled to the exit-side polarization plate 51 and the second surface 522 at the opposite side to the first surface 521.

The cold plate 55 cools the exit-side polarization plate 51 via the heat dissipation substrate 52. The plate main body 56A constituting the cold plate 55 includes the opening 562, the coupling portion 563, and the circulation portion 566, and the lid member 57 combined with the plate main body 56A has the opening 571 through which the light can pass.

The openings 562, 571 are each an opening through which light can pass.

The coupling portion 563 is disposed around the opening 562. The coupling portion 563 is thermally coupled to the second surface 522 of the heat dissipation substrate 52.

The liquid refrigerant flows through the circulation portion 566.

According to such a configuration, the cold plate 55 having the circulation portion through which the liquid refrigerant circulates cools the exit-side polarization plate 51 via the heat dissipation substrate 52 having the thermal conductivity equal to or higher than the thermal conductivity of the exit-side polarization plate 51. At this time, since the cold plate 55 has the openings 562, 571 through which light can pass, the light can be allowed to pass through the exit-side polarization plate 51. In addition, the coupling portion 563 is thermally coupled to the second surface 512 at the opposite side to the first surface 511 thermally coupled to the exit-side polarization plate 51 in the heat dissipation substrate 52. Therefore, the contact area between the heat dissipation substrate 52 having the region through which the light passes and the cold plate 55 can be increased compared to when the outer peripheral surface of the heat dissipation substrate 52 is in contact with the cold plate 55. Therefore, the cooling efficiency of the exit-side polarization plate 51 can be increased. Further, as a result, even when high-intensity light is incident on the first light modulation module 343, it is possible to suppress deterioration of the exit-side polarization plate 51, and by extension, it is possible to suppress deterioration of the first light modulation module 343. Further, the projector 1A capable of projecting the image light high in luminance can be configured.

In the light modulation module 343, the cold plate 55 has the housing recess 561 in which the heat dissipation substrate 52 and the exit-side polarization plate 51 are housed. The housing recess 561 corresponds to a recess.

According to such a configuration, the size of the first light modulation module 343 can be reduced by disposing the exit-side polarization plate 51 and the heat dissipation substrate 52 in the housing recess 561.

In the first light modulation module 343, the exit-side polarization plate 51 has the wire grid on the first surface 511 at the opposite side to the second surface 512 facing the heat dissipation substrate 52.

Here, metal nanowires constituting the wire grid are easily damaged. Therefore, when the wire grid is provided to the second surface 512 facing the heat dissipation substrate 52 in the exit-side polarization plate 51, there is a possibility that the wire grid is damaged when the exit-side polarization plate 51 and the heat dissipation substrate 52 are thermally coupled to each other.

In contrast, according to the configuration described above, since the wire grid is provided to the first surface 511 at the opposite side to the second surface 512 facing the heat dissipation substrate 52 in the exit-side polarization plate 51, it is possible to prevent the wire grid from being damaged. Therefore, it is possible to prevent the function of the exit-side polarization plate 51 from being impaired, and it is possible to easily maintain the quality of the first light modulation module 343.

The first light modulation module 343 includes the cover portion 5424 that covers the end surface orthogonal to the direction along the wire grid in the exit-side polarization plate 51. The side surfaces at the ±X direction sides and the side surfaces at the ±Y direction sides of each of the exit-side polarization plate 51 and the heat dissipation substrate 52 are covered with the inner side surfaces of the housing recess 561. That is, the gap between the exit-side polarization plate 51 and the heat dissipation substrate 52 is covered with the cold plate 55.

Here, when the humid dirt adheres to the end surface described above, a liquid enters the wire grid due to a capillary phenomenon, and optical characteristics of the exit-side polarization plate 51 are deteriorated.

In contrast, by covering the end surface described above with the cover portion 5424, it is possible to prevent the liquid from entering the wire grid. Therefore, it is possible to suppress deterioration of the optical characteristics of the exit-side polarization plate 51.

In addition, since the space between the exit-side polarization plate 51 and the heat dissipation substrate 52 is covered with the cold plate 55, it is possible to prevent a gas from entering the space between the exit-side polarization plate 51 and the heat dissipation substrate 52. Accordingly, it is possible to suppress the occurrence of fogging between the exit-side polarization plate 51 and the heat dissipation substrate 52. Therefore, when the light passes through the exit-side polarization plate 51, it is possible to suppress an increase in the temperature of the exit-side polarization plate 51 and further to suppress a decrease in the amount of light passing through the exit-side polarization plate 51.

The first light modulation module 343 includes the biasing member 54 that biases the exit-side polarization plate 51 and the heat dissipation substrate 52 to the cold plate 55.

According to such a configuration, the exit-side polarization plate 51 and the heat dissipation substrate 52 can be integrated with the cold plate 55 by the biasing member 54.

In addition, since the contact state between the exit-side polarization plate 51 and the heat dissipation substrate 52 and the contact state between the heat dissipation substrate 52 and the cold plate 55 can be maintained, it is possible to make it easy to transfer the heat of the exit-side polarization plate 51 to the cold plate 55 via the heat dissipation substrate 52. Therefore, the cooling efficiency of the exit-side polarization plate 51 can be increased.

The first light modulation module 343 includes the first adhesive AD1 and the second adhesive AD2 that bond the heat dissipation substrate 52 and the cold plate 55 to each other.

The heat dissipation substrate 52 has the third surface 523 crossing the first surface 521 and the second surface 522.

The first adhesive AD1 bonds the outer peripheral portion of the second surface 522 and the coupling portion 563 to each other.

The second adhesive AD2 is provided across the third surface 523 and the coupling portion 563.

According to such a configuration, the outer peripheral portion of the second surface 522 and the coupling portion 563 can be adhesively fixed to each other with the first adhesive AD1.

Here, when the first adhesive AD1 is a silicone-based adhesive having a high thermal conductivity, an organic silicone gas containing low-molecular-weight siloxane is generated as an outgas. When such an outgas adheres to a region through which the light passes between the exit-side polarization plate 51 and the heat dissipation substrate 52, fogging may occur in some cases. When such fogging occurs, a part of the light passing an area between the exit-side polarization plate 51 and the heat dissipation substrate 52 is absorbed, and thus, the amount of the light emitted is reduced, and the temperature of the polarization plate is likely to increase due to heat generation.

In contrast, since the second adhesive AD2 is disposed across the third surface 523 and the coupling portion 563 in the heat dissipation substrate 52, even when the outgas is generated from the first adhesive AD1, the second adhesive AD2 can suppress the diffusion of the outgas to the outside of the heat dissipation substrate 52 when viewed along the +Z direction of the opening. Therefore, since it is possible to suppress the outgas from entering an area between the exit-side polarization plate 51 and the heat dissipation substrate 52, it is possible to suppress an occurrence of the fogging, and thus it is possible to suppress the reduction in the amount of light emitted from the first light modulation module 343 and a rise in temperature of the exit-side polarization plate 51.

The projector 1A includes the polarization plate temperature sensor 612 and the processor 63 as the controller.

The polarization plate temperature sensor 612 corresponds to a temperature sensor that detects the temperature of the cold plate 55.

The processor 63 controls the flow rate of the liquid refrigerant flowing through the circulation portion 566 based on the temperature detected by the polarization plate temperature sensor 612.

According to such a configuration, it is possible to make it easy to maintain the temperature of the exit-side polarization plate 51 within an appropriate temperature range. Further, when the temperature of the cold plate 55 is relatively low and the temperature of the exit-side polarization plate 51 is maintained relatively low, the delivery amount of the liquid refrigerant with the pump 73 can be reduced. Consequently, it is possible to achieve power saving of the projector 1A compared to when the flow rate of the liquid refrigerant is controlled to be always constant.

In the projector 1A, the panel module 4A includes the liquid crystal panel 41 that modulates the incident light and then emits the result, and the cooler 45 which is thermally coupled to the liquid crystal panel 41 and through which the liquid refrigerant flows. The cooler 45 and the cold plate 55 are coupled in parallel to each other so that the liquid refrigerant can flow therethrough. In the example shown in FIG. 19, the cooler 45G and the cold plate 55G are coupled in parallel to each other so that the liquid refrigerant can flow with respect to the flow divider 78.

According to such a configuration, the liquid refrigerant relatively low in temperature can be circulated through each of the cooler 45 and the cold plate 55. Therefore, the cooling efficiency of each of the liquid crystal panel 41 and the exit-side polarization plate 51 can be increased.

The projector 1A includes a sealed housing 71 and the circulation fans 75. The sealed housing 71 is a housing that houses the image forming device 34 including the green light modulation element 342G configured with the first light modulation module 343. The circulation fans 75 are housed in the sealed housing 71 and circulate the cooling gas in the sealed housing 71.

According to such a configuration, the cooling gas can be circulated by the circulation fans 75 through the first light modulation module 343 housed in the sealed housing 71. Accordingly, the image forming device 34 including the first light modulation module 343 can be cooled also by the air flow. Therefore, it is possible to improve the cooling efficiency of the image forming device 34 including the first light modulation module 343.

The projector 1A includes the internal radiator 74.

The internal radiator 74 is housed in the sealed housing 71 so that the liquid refrigerant can flow therethrough, and exchanges heat between the liquid refrigerant circulated and the cooling gas in the sealed housing 71. The internal radiator 74 and the cold plate 55G are coupled in parallel to each other so that the liquid refrigerant can flow therethrough.

According to such a configuration, since the heat of the cooling gas in the sealed housing 71 can be transferred to the liquid refrigerant flowing through the internal radiator 74 by the internal radiator 74, the temperature of the cooling gas in the sealed housing 71 can be lowered. Accordingly, it is possible to lower the temperature of the image forming device 34 including the first light modulation module 343 disposed in the sealed housing 71.

Further, since the internal radiator 74 is coupled in parallel to the cold plate 55G, the liquid refrigerant relatively low in temperature flows through the internal radiator 74. Thus, the cooling efficiency of the cooling gas in the sealed housing 71 by the internal radiator 74 can be increased.

Therefore, it is possible to increase the cooling efficiency of the first light modulation module 343, and by extension, the image forming device 34.

The projector 1A includes the external radiator 76, the cooling fans 77, and the pump 73.

Each of the external radiator 76 and the cooling fans 77 is disposed outside the sealed housing 71. The liquid refrigerant circulates through the external radiator 76. The cooling fans 77 circulate the cooling gas to the external radiator 76.

The pump 73 circulates the liquid refrigerant cooled by the external radiator 76 to the cold plate 55G.

According to such a configuration, the liquid refrigerant can be cooled by the external radiator 76 and the cooling fans 77 disposed outside the sealed housing 71. Further, by the pump 73 circulating the liquid refrigerant thus cooled through the cold plate 55G, the green exit-side polarization plate can be cooled by the liquid refrigerant low in temperature. Therefore, it is possible to increase the cooling efficiency of the exit-side polarization plate 51, and by extension, it is possible to increase the cooling efficiency of the first light modulation module 343.

The projector 1A includes the color separation device 33 that separates the light emitted from the light source device 31 into the blue light, the green light, and the red light. The panel module 4A or 4B and the exit-side polarization plate 51 are provided to each of the optical paths of the red light, the green light, and the blue light. That is, the panel module 4B and the exit-side polarization plate 51 are disposed in the optical path of the red light. The panel module 4A and the exit-side polarization plate 51 are disposed in each of the optical paths of the blue light and the green light.

Here, the light source device 31 includes the light emitting element SS that emits the blue light as the excitation light, and the wavelength conversion element 3191 that converts the wavelength of the blue light.

The cold plate 55G is disposed in the optical path of the green light.

Here, when the light source device 31 includes the light emitting element SS and the wavelength conversion element 3191, the proportion of the green light in the illumination light emitted from the light source device 31 is higher than the proportion of the red light and is higher than the proportion of the blue light. In other words, in the illumination light emitted from the light source device 31, the amount of green light is larger than the amount of red light and is larger than the amount of blue light. Therefore, out of the exit-side polarization plates 51 disposed in the optical paths of the respective colored light, the temperature of the green exit-side polarization plate through which the green light passes tends to be higher than the temperature of the red exit-side polarization plate through which the red light passes, and tends to be higher than the temperature of the blue exit-side polarization plate through which the blue light passes.

In contrast, since the cold plate 55G for cooling the exit-side polarization plate 51 for green is disposed in the optical path of the green light, the green exit-side polarization plate can be effectively cooled. Therefore, the cooling efficiency of the green exit-side polarization plate large in amount of incident light can be increased, and the rise in temperature of the green exit-side polarization plate can be suppressed.

The projector 1A includes the pipe 80 coupled to the cold plate 55G.

The pipe 80 includes the pipes 806, 809. The pipe 806 is the supply pipe that supplies the liquid refrigerant to the circulation portion 566 of the cold plate 55G. The pipe 809 is the discharge pipe through which the liquid refrigerant having flowed through the circulation portion 566 is discharged. At least one of the pipes 806, 809 is formed of a bellows tube. In the present embodiment, each of the pipes 806, 809 is formed of a bellows tube.

According to such a configuration, since the bellows tube is extendable and bendable, it is possible to make it easy to dispose the cold plate 55G in a state where the liquid refrigerant can flow. In other words, the pipes 806, 809 can be easily coupled to the cold plate 55G. Therefore, assemblability of the projector 1A can be enhanced.

The polarization unit 5A includes the exit-side polarization plate 51 on which light is incident, the heat dissipation substrate 52, and the cold plate 55.

The exit-side polarization plate 51 corresponds to a polarization plate. The heat dissipation substrate 52 has the thermal conductivity equal to or higher than the thermal conductivity of the exit-side polarization plate 51. The heat dissipation substrate 52 is coupled to the exit-side polarization plate 51 in a heat transferable manner. The heat dissipation substrate 52 has the first surface 521 facing the exit-side polarization plate 51 and the second surface 522 at the opposite side to the first surface 521.

The cold plate 55 cools the exit-side polarization plate 51 via the heat dissipation substrate 52. The cold plate 55 includes the openings 562, 571 through which light can pass, the coupling portion 563 disposed around the opening 562 and thermally coupled to the second surface 522, and the circulation portion 566 through which the liquid refrigerant circulates.

Such a polarization unit 5A can achieve substantially the same advantages as those of the first light modulation module 343 described above.

### Modification of First Embodiment

In the plate main body 56A provided to the cold plate 55 described above, the resistive portion 5668 increases the flow path resistance of the liquid refrigerant in the fourth extending portion 5667 to adjust the flow rate of the liquid refrigerant flowing along the fourth extending portion 5667. Such a resistive portion 5668 is assumed to be configured with the protrusion toward the -Y direction of the inner surface facing the -Y direction out of the inner surfaces of the circulation portion 566 constituting the fourth extending portion 5667. However, this is not a limitation, and the configuration of the resistive portion is not limited to the above as long as the flow path resistance can be increased.

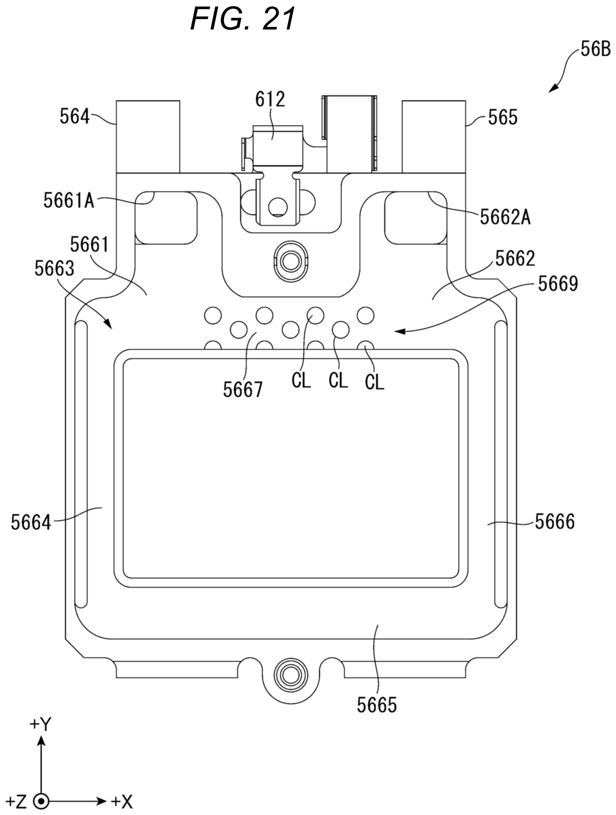

FIG. 21 is a diagram of a plate main body 56B, which is a deformation of the plate main body 56A, viewed from the +Z direction.

For example, instead of the plate main body 56A, the plate main body 56B shown in FIG. 21 may be adopted as the cold plate 55. The plate main body 56B has substantially the same configuration and function as those of the plate main body 56A except that the plate main body 56B includes a resistive portion 5669 instead of the resistive portion 5668.

Similarly to the resistive portion 5668, the resistive portion 5669 makes the flow path resistance of the liquid refrigerant along the fourth extending portion 5667 higher than the flow path resistance of the liquid refrigerant along the extending portions 5664 to 5666 to thereby reduce the pressure loss. The resistive portion 5669 is configured such that a plurality of columnar portions CL standing toward the +Z direction from the inner surface facing the +Z direction is disposed at regular intervals along the +X direction and the +Y direction in the fourth extending portion 5667.

The projector 1A including such a resistive portion 5669 instead of the resistive portion 5668 can also achieve substantially the same advantages as those of the projector 1A including the resistive portion 5668.

### Second Embodiment

Then, a second embodiment of the present disclosure will be described.

The projector according to the present embodiment has substantially the same configuration as that of the projector 1A according to the first embodiment, but differs therefrom in the arrangement of the cooler 45B, the cooler 45G, and the cold plate 55G in the flow path of the liquid refrigerant. Note that in the following description, the same or substantially the same portions as the portions having already been described are denoted by the same reference numerals, and the description thereof will be omitted.

### Schematic Configurations of Projector and Cooling Device

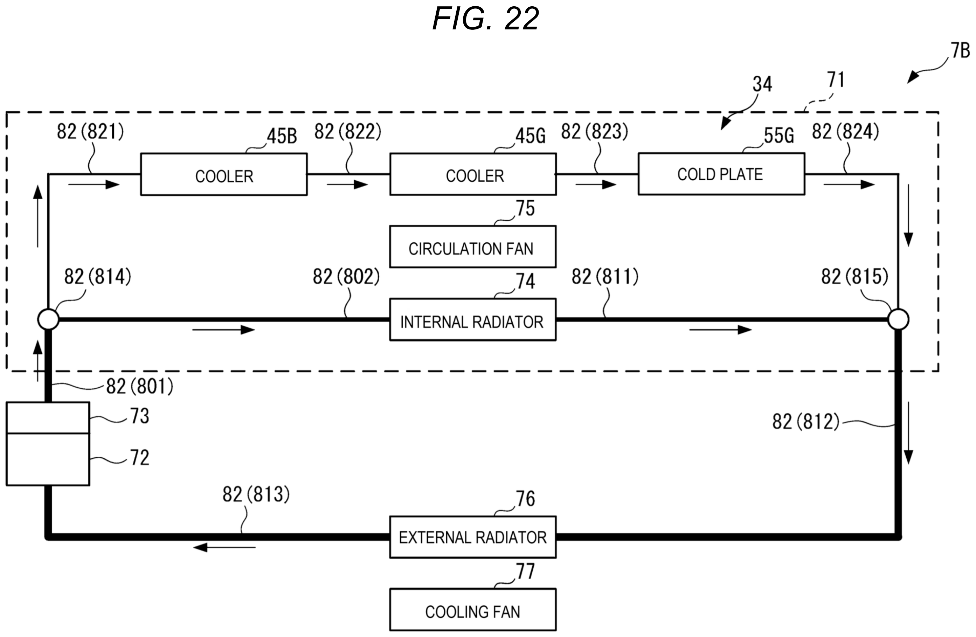

FIG. 22 is a schematic diagram showing a configuration of a cooling device 7B provided to the projector according to the present embodiment.

The projector according to the present embodiment has substantially the same configurations and functions as those of the projector 1A according to the first embodiment except that the cooling device 7B shown in FIG. 22 is provided instead of the cooling device 7A. The cooling device 7B has substantially the same configuration and function as those of the cooling device 7A except that a pipe 82 is provided instead of the flow divider 78, the merging section 79, and the pipe 80. That is, the cooling device 7B includes the sealed housing 71, the tank 72, the pump 73, the internal radiator 74, the circulation fans 75, the external radiator 76, the cooling fans 77, and the pipe 82. Note that the thermoelectric conversion device 44, the cooler 45, and the cold plate 55 also constitute the cooling device 7B.

Similarly to the pipe 80, the pipe 82 couples the components of the cooling device 7B to each other so that the liquid refrigerant can circulate. The pipe 82 has substantially the same configuration and function as those of the pipe 80 except that pipes 821 to 824 are provided instead of the pipes 803 to 810.

The pipe 821 couples the joint 814 and the cooler 45B to each other. The pipe 822 couples the cooler 45B and the cooler 45G to each other. The pipe 823 is a supply pipe that couples the cooler 45G and the cold plate 55G to each other to supply the liquid refrigerant circulating through the circulation portion 566. The pipe 824 is a discharge pipe that couples the cold plate 55G and the joint 815 to each other to discharge the liquid refrigerant having flowed through the circulation portion 566.

As described above, in the cooling device 7B, the internal radiator 74 and the cooler 45B are coupled in parallel to each other with respect to the pump 73 in the flow path of the liquid refrigerant. Meanwhile, the cooler 45B, the cooler 45G, and the cold plate 55G are coupled in series in this order.

Note that the pipes 821 to 824 are each formed of a bellows tube in consideration of ease of coupling between the members. However, this is not a limitation, and at least one of the pipes 821 to 824 may be formed of a bellows tube.

### Advantages of Second Embodiment

The projector according to the present embodiment described herein above provides the following advantages as well as substantially the same advantages provided by the projector 1A according to the first embodiment.

The panel module 4A of the first light modulation module 343 constituting the green light modulation element 342G includes the liquid crystal panel 41 that modulates the incident light and then emits the result, and the cooler 45G which is thermally coupled to the liquid crystal panel 41 and through which the liquid refrigerant circulates.

In the example shown in FIG. 22, the cooler 45G and the cold plate 55G are coupled in series to each other so that the liquid refrigerant can flow therethrough. In the present embodiment, the cooler 45G is disposed upstream of the flow path of the liquid refrigerant, and the cold plate 55G is disposed downstream of the flow path of the liquid refrigerant.

According to such a configuration, the liquid refrigerant flows through the cooler 45G and then flows through the cold plate 55G. Therefore, the liquid refrigerant low in temperature can be circulated through the cooler 45G high in necessity of being cooled.

In addition, since the cooler 45G and the cold plate 55G are coupled in series to each other so that the liquid refrigerant can circulate therethrough, it is possible to easily assemble the pipe 82 for circulating the liquid refrigerant through the cooler 45G and the cold plate 55G.

### Third Embodiment

Then, a third embodiment of the present disclosure will be described.

The projector according to the present embodiment has substantially the same configuration as that of the projector 1A according to the first embodiment, but is different in the configuration of the image projection device, and is different in the optical path of the colored light in which the polarization unit is disposed. Note that in the following description, the same or substantially the same portions as the portions having already been described are denoted by the same reference numerals, and the description thereof will be omitted.

### Schematic Configuration of Projector

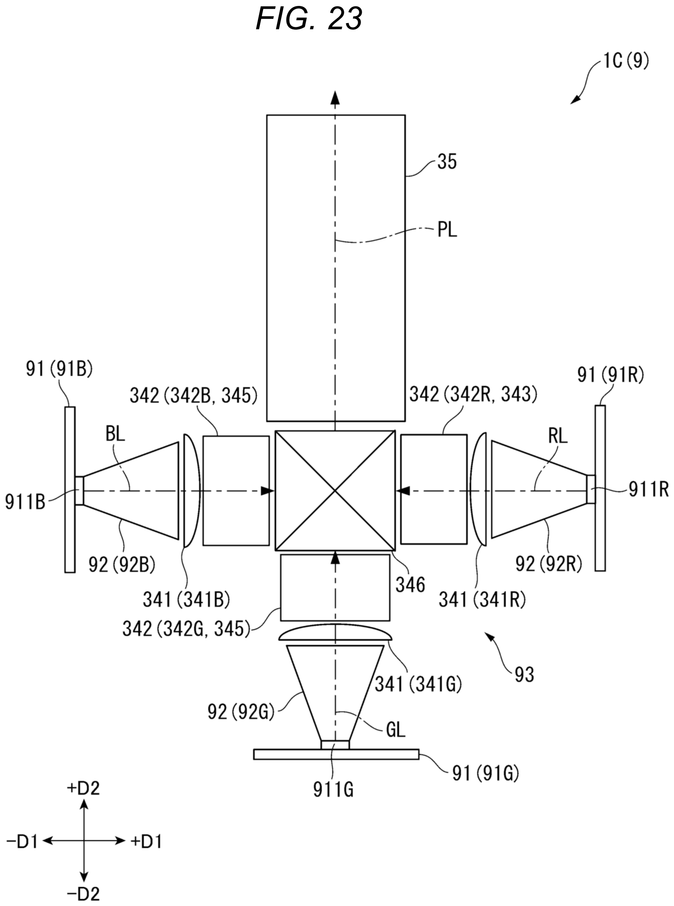

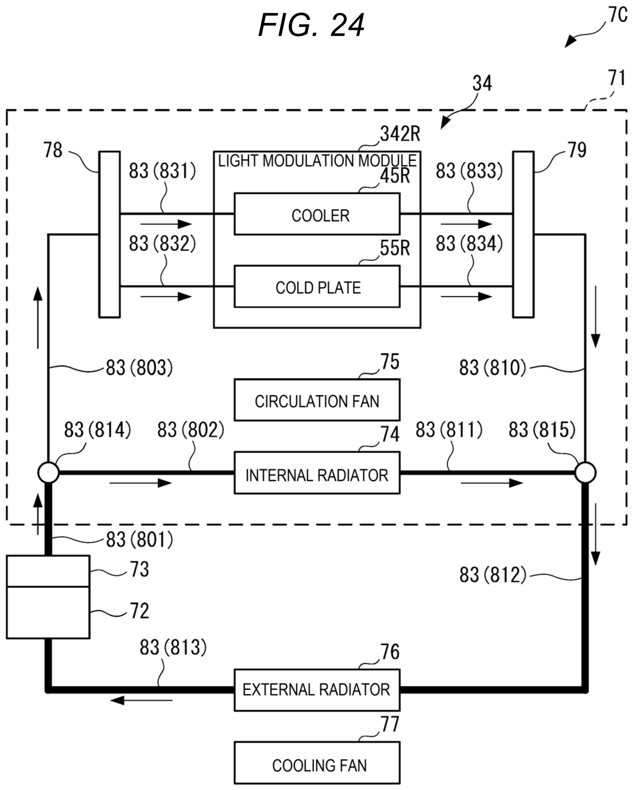

FIG. 23 is a schematic diagram showing the configuration of an image projection device 9 provided to a projector 1C according to the present embodiment. FIG. 24 is a schematic diagram showing a configuration of a cooling device 7C provided to the projector 1C.

The projector 1C according to the present embodiment includes substantially the same configuration and function as those of the projector 1A according to the first embodiment except that the image projection device 9 shown in FIG. 23 and the cooling device 7C shown in FIG. 24 instead of the image projection device 3 and the cooling device 7A, and the polarization unit 5A is disposed on the optical path of the red light.

### Configuration of Image Projection Device

The image projection device 9 generates image light PL to be projected on a projection target surface such as a screen and projects the image light PL under the control of the control device 6. The image projection device 9 includes light source devices 91, reflectors 92, an image forming device 93, and the projection optical device 35.

In the present embodiment, the entire image projection device 9 is housed in the sealed housing 71 described above. However, this is not a limitation, and for example, only the image forming device 93 may be housed in the sealed housing 71.

In the following description, two directions orthogonal to each other are defined as a +D1 direction and a +D2 direction. An opposite direction to the +D1 direction is defined as a - D1 direction, and an opposite direction to the +D2 direction is defined as a -D2 direction.

The light source devices 91 each emit light toward the light modulation device 342 of the image forming device 93. The light source devices 91 include a red light source 91R, a green light source 91G, and a blue light source 91B.

The red light source 91R emits the red light RL in the +D1 direction toward the red light modulation element 342R. The red light source 91R includes a red light emitting element 911R as a laser diode (LD) that emits the red light.

The green light source 91G emits the green light GL in the +D2 direction toward the green light modulation element 342G. The green light source 91G includes a green light emitting element 911G as an LD that emits the green light.

The blue light source 91B emits the blue light BL in the -D1 direction toward the blue light modulation element 342B. The blue light source 91B includes a blue light emitting element 911B as an LD that emits the blue light.

The reflectors 92 each guide the light emitted from the light source device 91 to the light modulation device 342. The reflectors 92 include a red reflector 92R, a green reflector 92G, and a blue reflector 92B. Each of the reflectors 92R, 92G, and 92B is formed in a truncated pyramidal shape having the cross-sectional area increasing toward the traveling direction of the colored light.

The red reflector 92R guides the red light RL emitted from the red light source 91R to the red light modulation element 342R and further homogenizes the illuminance of the red light RL passing therethrough.

The green reflector 92G guides the green light GL emitted from the green light source 91G to the green light modulation element 342G and further homogenizes the illuminance of the green light GL passing therethrough.

The blue reflector 92B guides the blue light BL emitted from the blue light source 91B to the blue light modulation element 342B and further homogenizes the illuminance of the blue light BL passing therethrough.

The image forming device 93 modulates each colored light emitted from the light source devices 91 to form the image light. The image forming device 93 includes field lenses 341, the light modulation devices 342, and a color combining device 346.

The field lens 341 collimates the light emitted from the reflector 92 and incident on the light modulation device 342. The field lenses 341 include a red field lens 341R that collimates the red light, a green field lens 341G that collimates the green light, and a blue field lens 341B that collimates the blue light.

The light modulation devices 342 each modulate the light emitted from the light source device 91. The light modulation devices 342 include the red light modulation element 342R, the green light modulation element 342G, and the blue light modulation element 342B as described above.

Here, when red, green, and blue laser beams emitted from the respective light sources 91R, 91G, and 91B are used for image formation, it is necessary to compensate for the X value out of the tristimulus values represented by X, Y, and Z with the red light. Therefore, in the light source device 91, it is necessary to make an amount of the red light RL emitted from the red light source 91R larger than an amount of the green light GL emitted from the green light source 91G and larger than an amount of the blue light BL emitted from the blue light source 91B.

As described above, when the amount of the red light RL increases, the temperatures of the red panel and the red exit-side polarization plate are likely to increase, and the red panel and the red exit-side polarization plate are likely to deteriorate. Incidentally, the amount of the green light and the amount of the blue light are smaller than the amount of the red light.

Therefore, in the projector 1C including the light source device 91 having the configuration described above, the first light modulation module 343 is adopted as the red light modulation element 342R, and the third light modulation module 345 is adopted as each of the blue light modulation element 342B and the green light modulation element 342G.

As described above, the color combining device 346 combines the red light, the green light, and the blue light modulated by the respective light modulation elements 342R, 342G, and 342B to form the image light PL.

As described above, the projection optical device 35 projects, onto the projection target surface, the image light PL emitted from the color combining device 346.

### Configuration of Cooling Device

FIG. 24 is a schematic diagram showing a configuration of a cooling device 7C provided to the projector 1C.

The cooling device 7C cools the cooling target of the projector 1C, similarly to the cooling device 7A according to the first embodiment. For example, the cooling device 7C cools the light modulation elements 342B, 342G, and 342R. Specifically, the cooling device 7C circulates the liquid refrigerant through each of the cooler 45 and the cold plate 55 of the red light modulation element 342R to cool the liquid crystal panel 41 and the exit-side polarization plate 51 for red. Further, the cooling device 7C circulates the cooling gas with the circulation fans 75 to cool the polarization conversion element 325 shown in FIG. 1 in addition to the liquid crystal panel 41, the incident-side polarization plate 46, and the exit-side polarization plate 51 of each of the light modulation elements 342R, 342G, and 342B.

The cooling device 7C has substantially the same configuration and function as those of the cooling device 7A according to the first embodiment except that a pipe 83 shown in FIG. 24 is provided instead of the pipe 80. Note that the thermoelectric conversion device 44, the cooler 45, and the cold plate 55 also constitute the cooling device 7C.

Hereinafter, the liquid crystal panel 41, the cooler 45, the exit-side polarization plate 51, and the cold plate 55 constituting the light modulation element 342R are referred to as a red panel, a cooler 45R, a red exit-side polarization plate, and a cold plate 55R, respectively.

The pipe 83 couples the components of the cooling device 7C to each other so that the liquid refrigerant can circulate. The pipe 83 has substantially the same configuration and function as those of the pipe 80 except that pipes 831 to 834 are provided instead of the pipes 804 to 809.

The pipe 831 couples the flow divider 78 and the cooler 45R to each other. The pipe 832 is a supply pipe that couples the flow divider 78 and the cold plate 55R to each other to supply the liquid refrigerant circulating through the circulation portion 566 of the cold plate 55R. The pipe 833 couples the cooler 45R and the merging section 79 to each other. The pipe 834 is a discharge pipe that couples the cold plate 55R and the merging section 79 to each other to discharge the liquid refrigerant having flowed through the circulation portion 566 of the cold plate 55R.

Note that the pipes 831 to 834 are each formed of a bellows tube in consideration of ease of coupling between the members. However, this is not a limitation, and at least one of the pipes 831 to 834 may be formed of a bellows tube.

As described above, in the cooling device 7C according to the present embodiment, the internal radiator 74, the cooler 45R, and the cold plate 55R are coupled to each other in parallel to each other with respect to the pump 73 in the flow path of the liquid refrigerant. In particular, the cooler 45R and the cold plate 55R are coupled in parallel to each other with respect to the flow divider 78.

The light modulation elements 342B, 342G not including each of the cooler 45 and the cold plate 55 are cooled by the cooling gas in the sealed housing 71 circulated by the circulation fans 75.

### Advantages of Third Embodiment

The projector 1C according to the present embodiment described hereinabove provides the following advantages besides substantially the same advantages as those provided by the projector 1A according to the first embodiment.

In the projector 1C, the light source device 31 includes the blue light emitting element 911B that emits the blue light BL, the green light emitting element 911G that emits the green light GL, and the red light emitting element 911R that emits the red light RL. The panel module 4B and the exit-side polarization plate 51 are provided to the optical path of each of the blue light BL and the green light GL.

The red light modulation element 342R provided to the optical path of the red light RL is formed of the first light modulation module 343 described above. Therefore, the panel module 4A including the liquid crystal panel 41, and the polarization unit 5A including the exit-side polarization plate 51 and the cold plate 55 are provided to the optical path of the red light RL.

Here, in order to configure white light having a natural hue with the blue light BL, the green light GL, and the red light RL emitted respectively from the blue light emitting element 911B, the green light emitting element 911G, and the red light emitting element 911R, it is necessary to make the proportion of the red light RL higher than the proportion of the blue light BL and the proportion of the green light GL. That is, in the white light having a natural hue, the amount of the red light RL is larger than the amount of the blue light BL and is larger than the amount of the green light GL.

In contrast, since the cold plate 55R that cools the red exit-side polarization plate is disposed in the optical path of the red light RL, the red exit-side polarization plate can be effectively cooled. Therefore, the cooling efficiency of the red exit-side polarization plate large in amount of incident light can be increased, and the rise in temperature of the red exit-side polarization plate can be suppressed.

### Fourth Embodiment

Then, a fourth embodiment of the present disclosure will be described.

A projector according to the present embodiment has substantially the same configuration as that of the projector 1C according to the third embodiment, but is different in that the cooler 45R and the cold plate 55R are coupled in series to each other in the flow path of the liquid refrigerant. Note that in the following description, the same or substantially the same portions as the portions having already been described are denoted by the same reference numerals, and the description thereof will be omitted.

### Schematic Configurations of Projector and Cooling Device

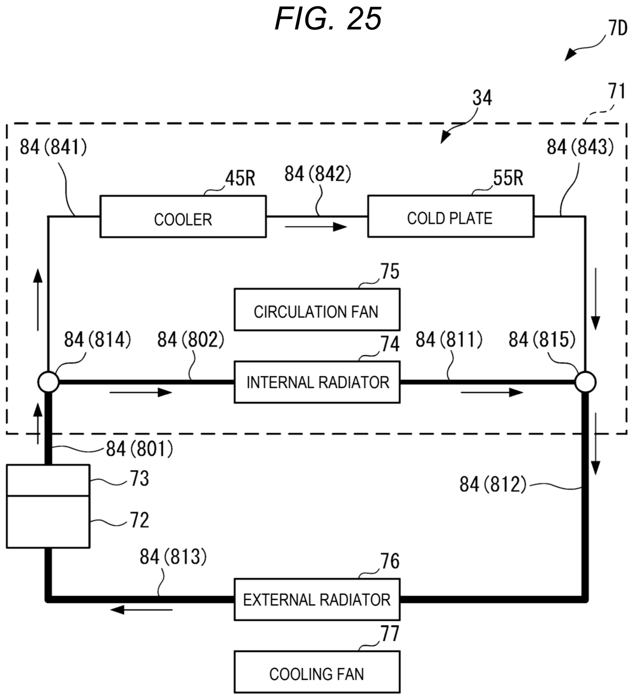

FIG. 25 is a schematic diagram showing a configuration of a cooling device 7D provided to the projector according to the present embodiment.

The projector according to the present embodiment has substantially the same configurations and functions as those of the projector 1C according to the third embodiment except that the cooling device 7D shown in FIG. 25 is provided instead of the cooling device 7C. The cooling device 7D has substantially the same configuration and function as those of the cooling device 7C except that a pipe 84 is provided instead of the flow divider 78, the merging section 79, and the pipe 83.

The pipe 84 couples the components of the cooling device 7D to each other so that the liquid refrigerant can circulate. The pipe 84 has substantially the same configuration and function as those of the pipe 83 except that pipes 841 to 843 are provided instead of the pipes 803, 810, and 831 to 834.

The pipe 841 couples the joint 814 and the cooler 45R to each other. The pipe 842 is a supply pipe that couples the cooler 45R and the cold plate 55R to each other to supply the liquid refrigerant circulating through the circulation portion 566 of the cold plate 55R. The pipe 843 is a discharge pipe that couples the cold plate 55R and the joint 815 to each other to discharge the liquid refrigerant having flowed through the circulation portion 566 of the cold plate 55R.

Note that the pipes 841 to 843 are each formed of a bellows tube in consideration of ease of coupling between the members. However, this is not a limitation, and at least one of the pipes 841 to 843 may be formed of a bellows tube.

As described above, in the cooling device 7D, the internal radiator 74 and the cooler 45R are coupled in parallel to each other with respect to the pump 73 in the flow path of the liquid refrigerant. Meanwhile, the cold plate 55R is coupled in series to the cooler 45R.

The light modulation elements 342B, 342G not including each of the cooler 45 and the cold plate 55 are cooled by the cooling gas in the sealed housing 71 circulated by the circulation fans 75.

The projector according to the present embodiment described hereinabove can achieve substantially the same advantages as those of the projector according to the second embodiment and the projector 1C according to the third embodiment.

### Modifications of Embodiments

The present disclosure is not limited to each of the embodiments described above, and modifications, improvements, and so on in a range in which the object of the present disclosure can be achieved should fall within the scope of the present disclosure.

In each of the embodiments described above, it is assumed that the cold plate 55 includes the coupling portion 563 disposed around the opening 562, and the coupling portion 563 is thermally coupled to the second surface 522. In a specific description, it is assumed that the coupling portion 563 is thermally coupled to the outer peripheral portion located outside the region through which the light passes in the second surface 522 when viewed along the traveling direction of the light passing through the opening 562. However, this is not a limitation, and it is sufficient for the coupling portion 563 to be thermally coupled to the second surface 522, and the coupling position of the coupling portion 563 with respect to the second surface 522 is not limited to the outer peripheral portion of the second surface 522. In addition, even when the coupling portion 563 is coupled to the outer peripheral portion of the second surface 522, the coupling portion 563 is not required to be coupled to the entire region around the opening 562, and may be provided to, for example, a part of the periphery of the opening 562 and may be thermally coupled to a part of the outer peripheral portion described above of the second surface 522.

In each of the embodiments described above, it is assumed that the polarization plate provided to the polarization unit 5A is the exit-side polarization plate 51. However, this is not a limitation, and the polarization plate provided to the polarization unit 5A may be the incident-side polarization plate 46. Further, the polarization unit according to the present disclosure may be adopted instead of the polarization plate used in other electronic apparatuses such as a projector and an illumination device.

In each of the embodiments described above, it is assumed that the plate main body 56A, 56B of the cold plate 55 includes the housing recess 561 as the recess in which the exit-side polarization plate 51 and the heat dissipation substrate 52 are disposed. However, this is not a limitation, and the housing recess 561 may be omitted.

Further, it is assumed that the housing recess 561 is a two-step recess having the first recess 5611 and the second recess 5612. However, this is not a limitation, and the housing recess may be a single-step recess having only the first recess.

In each of the embodiments described above, it is assumed that the wire grid is provided on the first surface 511 at the opposite side to the second surface 512 facing the heat dissipation substrate 52 in the exit-side polarization plate 51. However, this is not a limitation, and the wire grid may be disposed at the second surface 512 facing the heat dissipation substrate 52.

In each of the embodiments described above, it is assumed that the second biasing member 542 out of the biasing members 54 constituting the polarization unit 5A includes the cover portion 5424 that covers the end edge 514 crossing the +Y direction in which the wire grid extends in the exit-side polarization plate 51. However, this is not a limitation, and the cover portion 5424 may be omitted. Further, the configuration in which the cover portion 5424 is provided to the biasing member 54 is not a limitation, and the cover portion 5424 may be provided to other members such as the cold plate 55.

In each of the embodiments described above, it is assumed that the gap between the exit-side polarization plate 51 and the heat dissipation substrate 52 is covered with the inner side surface of the housing recess 561. However, this is not a limitation, and the gap between the exit-side polarization plate 51 and the heat dissipation substrate 52 may be covered with a member other than the cold plate 55, or the gap between the exit-side polarization plate 51 and the heat dissipation substrate 52 may be exposed.

In each of the embodiments described above, it is assumed that the polarization unit 5A includes the biasing member 54 that biases the exit-side polarization plate 51 and the heat dissipation substrate 52 to the plate main body 56A, 56B of the cold plate 55. However, this is not a limitation, and for example, when the heat dissipation substrate 52 is fixed to the cold plate 55 and the exit-side polarization plate 51 is fixed to the heat dissipation substrate 52 with an adhesive or the like, the polarization unit 5A is not necessarily required to include the biasing member 54.

In each of the embodiments described above, it is assumed that the heat dissipation substrate 52 and the plate main body 56A, 56B are adhesively fixed to each other with the first adhesive AD1 and the second adhesive AD2. However, this is not a limitation, and one of the first adhesive AD1 and the second adhesive AD2 may be omitted. Further, for example, the adhesives AD1, AD2 may be omitted as long as the exit-side polarization plate 51 and the heat dissipation substrate 52 can be press-fixed to the plate main body 56A, 56B with the biasing force of the biasing member 54.

In each of the embodiments described above, it is assumed that the processor 63 as the controller controls the cooling device 7A, 7B, 7C, or 7D based on the detection results of the panel temperature sensors 611 and the polarization plate temperature sensor 612. However, this is not a limitation, and the processor 63 may control the cooling device 7A, 7B, 7C, or 7D based only on the detection result by the polarization plate temperature sensor 612. Further, the processor 63 may control the cooling device 7A, 7B, 7C, or 7D based on other parameters such as the temperature in the sealed housing 71.

In each of the embodiments described above, it is assumed that the polarization plate temperature sensor 612 detects the temperature of the cold plate 55 as the temperature of the exit-side polarization plate 51. However, this is not a limitation, and the polarization plate temperature sensor 612 may detect the temperature of the heat dissipation substrate 52 as the temperature of the exit-side polarization plate 51. Further, the temperature sensor may directly detect the temperature of the polarization plate.

In each of the embodiments described above, it is assumed that the cooling device 7A, 7B, 7C, or 7D includes the sealed housing 71 in which the light modulation elements 342B, 342G, and 342R are housed and the circulation fans 75 that circulate the cooling gas in the sealed housing 71. However, this is not a limitation, and the sealed housing 71 may be omitted. In this case, instead of the circulation fans 75, a fan that circulates a gas in the exterior housing 2 to each of the light modulation elements 342B, 342G, and 342R may be provided.

In each of the embodiments described above, it is assumed that the internal radiator 74 that cools the cooling gas in the sealed housing 71 is disposed in the sealed housing 71. However, this is not a limitation, and the internal radiator 74 may be omitted.

Further, it is assumed that the internal radiator 74 and the flow divider 78 or the cooler 45 are coupled in parallel to each other with respect to the pump 73. However, this is not a limitation, and the arrangement order of the internal radiator 74 and the flow divider 78 or the cooler 45 in the flow path of the liquid refrigerant can appropriately be changed.

In the first and second embodiments described above, it is assumed that the polarization unit 5A including the cold plate 55 constitutes the green light modulation element 342G. In the third and fourth embodiments described above, it is assumed that the polarization unit 5A constitutes the red light modulation element 342R. However, this is not a limitation, and the optical path of the colored light in which the polarization unit 5A is disposed can appropriately be changed.

In each of the embodiments described above, it is assumed that the pipe coupled to the polarization unit 5A is formed of the bellows tube. However, this is not a limitation, and the pipe coupled to the polarization unit 5A may be a tubular member other than the bellows tube.

In each of the embodiments described above, it is assumed that the projector 1A, 1C includes the three light modulation elements 342R, 342G, and 342B. However, this is not a limitation, and the present disclosure is also applicable to a projector including two or less or four or more light modulation elements.

In each of the embodiments described above, it is assumed that the light modulation elements 342R, 342G, and 342B each include the transmissive liquid crystal panel 41 in which the plane of incidence of light and the light exit surface are different from each other. However, this is not a limitation, and a reflective liquid crystal panel in which the plane of incidence of light and the light exit surface are the same may be provided. Further, any light modulation element other than the liquid crystal light modulation element such as one using a device using micromirrors, for example, a digital micromirror device (DMD) may be used as long as the light modulation element is capable of modulating an incident luminous flux to form an image according to the image information. In this case, since the exit-side polarization plate is not necessary, the polarization unit of the present disclosure may be adopted for other applications than the exit-side polarization plate.

### Summary of Present Disclosure

The present disclosure will be summarized below as appendices.

### Appendix 1

A light modulation module including:
a panel module configured to modulate incident light;
a polarization plate on which light emitted from the panel module is incident;
a heat dissipation substrate having thermal conductivity equal to or higher than thermal conductivity of the polarization plate; and
a cold plate configured to cool the polarization plate via the heat dissipation substrate, in which
the heat dissipation substrate has
a first surface thermally coupled to the polarization plate, and
a second surface at an opposite side to the first surface, and
the cold plate includes
an opening through which light passes,
a coupling portion disposed around the opening and thermally coupled to the second surface, and
a circulation portion through which a liquid refrigerant circulates.

According to such a configuration, the cold plate including the circulation portion through which the liquid refrigerant circulates cools the polarization plate via the heat dissipation substrate having thermal conductivity equal to or higher than the thermal conductivity of the polarization plate. At this time, since the cold plate has the opening through which light can pass, it is possible to allow the light to pass through the polarization plate. In addition, the coupling portion is coupled to the second surface at the opposite side to the first surface thermally coupled to the polarization plate in the heat dissipation substrate. Therefore, compared to when the outer peripheral surface of the heat dissipation substrate is in contact with the cold plate, the contact area between the heat dissipation substrate having a region through which light passes and the cold plate can be increased. Therefore, the cooling efficiency of the polarization plate can be increased. Further, accordingly, even when high-luminance light is incident on the light modulation module, deterioration of the polarization plate can be suppressed, and by extension, deterioration of the light modulation module can be suppressed.

### Appendix 2

In the light modulation module according to Appendix 1,
the cold plate has a recess in which the heat dissipation substrate and the polarization plate are housed.

According to such a configuration, since the heat dissipation substrate and the polarization plate are disposed in the recess, the size of the light modulation module can be reduced.

### Appendix 3

In the light modulation module according to one of Appendices 1 and 2,
the polarization plate includes a wire grid at a surface at an opposite side to a surface facing the heat dissipation substrate.

Here, metal nanowires constituting the wire grid are easily damaged. Therefore, when the wire grid is provided to the surface facing the heat dissipation substrate in the polarization plate, there is a possibility that the wire grid is damaged when the polarization plate and the heat dissipation substrate are thermally coupled to each other.

In contrast, according to the configuration described above, since the wire grid is provided to the surface at the opposite side to the surface facing the heat dissipation substrate in the polarization plate, it is possible to prevent the wire grid from being damaged. Therefore, it is possible to prevent the function of the polarization plate from being impaired, and by extension, it is possible to make it easy to maintain the quality of the light modulation module.

### Appendix 4

In the light modulation module according to Appendix 3, there is further provided
a cover portion configured to cover an end surface orthogonal to a direction along the wire grid in the polarization plate, in which
a gap between the polarization plate and the heat dissipation substrate is covered with the cold plate.

Here, when the humid dirt adheres to the end surface described above, a liquid enters the wire grid due to a capillary phenomenon to deteriorate optical characteristics of the polarization plate.

In contrast, by covering the end surface described above with the cover portion, it is possible to prevent the liquid from entering the wire grid. Therefore, it is possible to prevent the optical characteristics of the polarization plate from deteriorating.

In addition, since the space between the polarization plate and the heat dissipation substrate is covered with the cold plate, it is possible to prevent a gas from entering the space between the polarization plate and the heat dissipation substrate. As a result, it is possible to prevent fogging from occurring between the polarization plate and the heat dissipation substrate. Therefore, when the light passes through the polarization plate, it is possible to suppress an increase in the temperature of the polarization plate and further to suppress a decrease in the amount of light passing through the polarization plate.

### Appendix 5

In the light modulation module according to any one of Appendices 1 to 4, there is further provided
a biasing member configured to bias the polarization plate and the heat dissipation substrate toward the cold plate.

According to such a configuration, the polarization plate and the heat dissipation substrate can be integrated with the cold plate by the biasing member.

In addition, since the contact state between the polarization plate and the heat dissipation substrate and the contact state between the heat dissipation substrate and the cold plate can be maintained, it is possible to make it easy to transfer the heat of the polarization plate to the cold plate via the heat dissipation substrate. Therefore, the cooling efficiency of the polarization plate can be increased.

### Appendix 6

In the light modulation module according to any one of Appendices 1 to 5, there is further provided
a first adhesive and a second adhesive configured to bond the heat dissipation substrate and the cold plate to each other, in which
the heat dissipation substrate has a third surface crossing the first surface and the second surface,
the first adhesive bonds an outer peripheral portion of the second surface and the coupling portion to each other, and
the second adhesive is disposed across the third surface and the coupling portion.

According to such a configuration, the outer peripheral portion of the second surface and the coupling portion can be adhesively fixed to each other with the first adhesive.

Here, when the first adhesive is a silicone-based adhesive having a high thermal conductivity, an organic silicone gas containing low-molecular-weight siloxane is generated as an outgas. When such an outgas adheres to a region through which the light passes between the heat dissipation substrate and the polarization plate, fogging may occur in some cases. When such fogging occurs, a part of the light passing an area between the heat dissipation substrate and the polarization plate is absorbed, and thus, the amount of the light emitted is reduced, and the temperature of the polarization plate is likely to increase due to heat generation.

In contrast, since the second adhesive is disposed across a side surface as the third surface and the coupling portion in the heat dissipation substrate, even when the outgas is generated from the first adhesive, the second adhesive can suppress the diffusion of the outgas to the outside of the heat dissipation substrate when viewed along the traveling direction of the light passing through the opening. Therefore, since it is possible to suppress the outgas from entering an area between the heat dissipation substrate and the polarization plate, it is possible to suppress an occurrence of the fogging, and thus it is possible to suppress the reduction in the amount of light emitted from the light modulation module and a rise in temperature of the polarization plate.

### Appendix 7

A projector including:
the light modulation module according to any one of Appendices 1 to 6;
a light source device configured to emit light to be incident on the light modulation module; and
a projection optical device configured to project light modulated by the light modulation module.

According to such a configuration, substantially the same advantages as those of the light modulation module described above can be achieved. Thus, it is possible to configure a projector capable of projecting high-luminance image light.

### Appendix 8

In the projector according to Appendix 7, there are further provided:
a temperature sensor configured to detect a temperature of the cold plate; and
a controller configured to control a flow rate of the liquid refrigerant circulating through the circulation portion based on the temperature detected by the temperature sensor.

According to such a configuration, it is possible to make it easy to maintain the temperature of the polarization plate within an appropriate temperature range. Further, when a pump for supplying the liquid refrigerant to the cold plate is provided, when the temperature of the cold plate is relatively low and the temperature of the polarization plate is maintained relatively low, the delivery amount of the liquid refrigerant with the pump can be reduced. Consequently, it is possible to achieve power saving of the projector compared to when the flow rate of the liquid refrigerant is controlled to be always constant.

### Appendix 9

In the projector according to one of Appendices 7 and 8,
the panel module includes
a liquid crystal panel configured to modulate incident light and emit the light modulated, and
a cooler which is thermally coupled to the liquid crystal panel and through which the liquid refrigerant circulates, and
the cooler and the cold plate are coupled in series so as to allow the liquid refrigerant to circulate.

According to such a configuration, the liquid refrigerant flows through one of the cooler and the cold plate, and then flows through the other thereof. Therefore, the liquid refrigerant low in temperature can be circulated through one high in necessity of being cooled out of the cooler and the cold plate.

In addition, since the cooler and the cold plate are coupled in series to each other so that the liquid refrigerant can circulate therethrough, it is possible to easily assemble the pipe for circulating the liquid refrigerant through the cooler and the cold plate.

### Appendix 10

In the projector according to one of Appendices 7 and 8,
the panel module includes
a liquid crystal panel configured to modulate incident light and emit the light modulated, and
a cooler which is thermally coupled to the liquid crystal panel and through which the liquid refrigerant circulates, and
the cooler and the cold plate are coupled in parallel so as to allow the liquid refrigerant to circulate.

According to such a configuration, the liquid refrigerant relatively low in temperature can be circulated through each of the cooler and the cold plate. Therefore, the cooling efficiency of each of the liquid crystal panel and the polarization plate can be increased.

### Appendix 11

In the projector according to any one of Appendices 7 to 10, there are further provided:
a housing configured to house the light modulation module; and
a circulation fan housed in the housing and configured to circulate a gas in the housing.

According to such a configuration, the gas can be circulated by the circulation fan through the light modulation module housed in the housing. Accordingly, the light modulation module can be cooled by the air flow. Therefore, the cooling efficiency of the light modulation module can be increased.

### Appendix 12

In the projector according to Appendix 11, there is further provided
an internal radiator housed in the housing so as to allow the liquid refrigerant to circulate, and configured to exchange heat between the liquid refrigerant flowing through the internal radiator and a gas in the housing, in which
the cold plate and the internal radiator are coupled in parallel to each other so as to allow the liquid refrigerant to circulate through the cold plate and the internal radiator.

According to such a configuration, since the heat of the gas in the housing can be transferred to the liquid refrigerant flowing through the internal radiator by the internal radiator, the temperature of the gas in the housing can be lowered. Thus, the temperature of the light modulation module disposed in the housing can be lowered.

Further, since the internal radiator is coupled in parallel to the cold plate, the liquid refrigerant relatively low in temperature flows through the internal radiator. Thus, the cooling efficiency of the gas in the housing by the internal radiator can be increased.

Therefore, the cooling efficiency of the light modulation module can be increased.

### Appendix 13

In the projector according to one of Appendices 11 and 12, there are further provided:
an external radiator which is disposed outside the housing and through which the liquid refrigerant circulates;
a cooling fan disposed outside the housing and configured to circulate a cooling gas through the external radiator; and
a pump configured to circulate the liquid refrigerant cooled by the external radiator through the cold plate.

According to such a configuration, the liquid refrigerant can be cooled by the external radiator and the cooling fan disposed outside the housing. Further, by the pump circulating the liquid refrigerant thus cooled through the cold plate, the polarization plate can be cooled by the liquid refrigerant low in temperature. Therefore, it is possible to increase the cooling efficiency of the polarization plate, and by extension, it is possible to increase the cooling efficiency of the light modulation module.

### Appendix 14

In the projector according to any one of Appendices 7 to 13, there is further provided
a color separation device configured to separate the light emitted from the light source device into blue light, green light, and red light, in which
the panel module and the polarization plate are provided to an optical path of each of the red light, the green light, and the blue light,
the light source device includes
a light emitting element configured to emit excitation light, and
a wavelength conversion element configured to convert a wavelength of the excitation light, and
the cold plate is provided to at least the optical path of the green light.

Here, when the light source device includes the light emitting element and the wavelength conversion element, the proportion of the green light in the light emitted from the light source device is higher than the proportion of the red light and is higher than the proportion of the blue light. In other words, in the light emitted from the light source device, the amount of green light is larger than the amount of red light and is larger than the amount of blue light. Therefore, out of the polarization plates disposed in the optical paths of the respective colored light, the temperature of the green polarization plate through which the green light passes tends to be higher than the temperature of the red polarization plate through which the red light passes, and tends to be higher than the temperature of the blue polarization plate through which the blue light passes.

In contrast, since the cold plate for cooling the green polarization plate is disposed in at least the optical path of the green light, the green polarization plate can be effectively cooled. Therefore, the cooling efficiency of the green polarization plate large in amount of incident light can be increased, and the rise in temperature of the green polarization plate can be suppressed.

### Appendix 15

In the projector according to any one of Appendices 7 to 13,
the light source device includes
a blue light emitting element configured to emit blue light,
a green light emitting element configured to emit green light, and
a red light emitting element configured to emit red light,
the panel module and the polarization plate are provided to an optical path of each of the red light, the green light, and the blue light, and
the cold plate is provided to at least the optical path of the red light.

Here, in order to configure white light having a natural hue with the blue light, the green light, and the red light emitted respectively from the blue light emitting element, the green light emitting element, and the red light emitting element, it is necessary to make the proportion of the red light higher than the proportion of the blue light and the proportion of the green light. That is, in the white light having a natural hue, the amount of the red light is larger than the amount of the blue light and is larger than the amount of the green light.

In contrast, since the cold plate for cooling the red polarization plate through which the red light passes is disposed in at least the optical path of the red light, the red polarization plate can be effectively cooled. Therefore, the cooling efficiency of the red polarization plate large in amount of incident light can be increased, and the rise in temperature of the red polarization plate can be suppressed.

### Appendix 16

In the projector according to any one of Appendices 7 to 15, there is further provided
a pipe coupled to the cold plate, in which
the pipe includes
a supply pipe configured to supply the liquid refrigerant to the circulation portion, and
a discharge pipe configured to discharge the liquid refrigerant having flowed through the circulation portion, and
at least one of the supply pipe and the discharge pipe is formed of a bellows tube.

According to such a configuration, since the bellows tube is extendable and bendable, it is possible to make it easy to dispose the cold plate in a state where the liquid refrigerant can flow. Therefore, assemblability of the projector can be enhanced.

### Appendix 17

A polarization unit including:
a polarization plate on which light is incident;
a heat dissipation substrate having thermal conductivity equal to or higher than thermal conductivity of the polarization plate, and coupled to the polarization plate in a heat transferable manner; and
a cold plate configured to cool the polarization plate via the heat dissipation substrate, in which
the heat dissipation substrate has
a first surface facing the polarization plate, and
a second surface at an opposite side to the first surface, and
the cold plate includes
an opening through which light passes,
a coupling portion disposed around the opening and thermally coupled to the second surface, and
a circulation portion through which a liquid refrigerant circulates.

Such a polarization unit can achieve substantially the same advantages as those of the light modulation module described above.

## Claims

1. A light modulation module comprising:
a panel module configured to modulate incident light;
a polarization plate disposed to receive light emitted from the panel module;
a heat dissipation substrate having thermal conductivity equal to or greater than thermal conductivity of the polarization plate; and
a cold plate configured to cool the polarization plate via the heat dissipation substrate, wherein
the heat dissipation substrate has
a first surface thermally coupled to the polarization plate, and
a second surface opposite the first surface, and
the cold plate includes
an opening through which light passes,
a coupling portion disposed around the opening and thermally coupled to the second surface, and
a circulation portion through which a liquid refrigerant circulates.

2. The light modulation module according to claim 1, wherein
the cold plate has a recess in which the heat dissipation substrate and the polarization plate are housed.

3. The light modulation module according to claim 1, wherein
the polarization plate includes a wire grid on a surface opposite a surface facing the heat dissipation substrate.

4. The light modulation module according to claim 3, further comprising
a cover portion configured to cover an end surface orthogonal to a direction along the wire grid in the polarization plate, wherein
a gap between the polarization plate and the heat dissipation substrate is covered with the cold plate.

5. The light modulation module according to claim 1, further comprising
a biasing member configured to bias the polarization plate and the heat dissipation substrate toward the cold plate.

6. The light modulation module according to claim 1, further comprising
a first adhesive and a second adhesive configured to bond the heat dissipation substrate and the cold plate to each other, wherein
the heat dissipation substrate has a third surface crossing the first surface and the second surface,
the first adhesive bonds an outer peripheral portion of the second surface and the coupling portion to each other, and
the second adhesive is disposed across the third surface and the coupling portion.

7. A projector comprising:
the light modulation module according to claim 1;
a light source device configured to emit light to be incident on the light modulation module; and
a projection optical device configured to project light modulated by the light modulation module.

8. The projector according to claim 7, further comprising:
a temperature sensor configured to detect a temperature of the cold plate; and
a controller configured to control a flow rate of the liquid refrigerant circulating through the circulation portion based on the temperature detected by the temperature sensor.

9. The projector according to claim 7, wherein
the panel module includes
a liquid crystal panel configured to modulate incident light and emit the light modulated, and
a cooler which is thermally coupled to the liquid crystal panel and through which the liquid refrigerant circulates, and
the cooler and the cold plate are coupled in series so as to allow the liquid refrigerant to circulate.

10. The projector according to claim 7, wherein
the panel module includes
a liquid crystal panel configured to modulate incident light and emit the light modulated, and
a cooler which is thermally coupled to the liquid crystal panel and through which the liquid refrigerant circulates, and
the cooler and the cold plate are coupled in parallel so as to allow the liquid refrigerant to circulate.

11. The projector according to claim 7, further comprising:
a housing configured to house the light modulation module; and
a circulation fan housed in the housing and configured to circulate a gas in the housing.

12. The projector according to claim 11, further comprising
an internal radiator housed in the housing so as to allow the liquid refrigerant to circulate, and configured to exchange heat between the liquid refrigerant flowing through the internal radiator and a gas in the housing, wherein
the cold plate and the internal radiator are coupled in parallel to each other so as to allow the liquid refrigerant to circulate through the cold plate and the internal radiator.

13. The projector according to claim 11, further comprising:
an external radiator which is disposed outside the housing and through which the liquid refrigerant circulates;
a cooling fan disposed outside the housing and configured to circulate a cooling gas through the external radiator; and
a pump configured to circulate the liquid refrigerant cooled by the external radiator through the cold plate.

14. The projector according to claim 7, further comprising
a color separation device configured to separate the light emitted from the light source device into blue light, green light, and red light, wherein
the panel module and the polarization plate are provided in an optical path of each of the red light, the green light, and the blue light,
the light source device includes
a light emitting element configured to emit excitation light, and
a wavelength conversion element configured to convert a wavelength of the excitation light, and
the cold plate is provided in at least the optical path of the green light.

15. The projector according to claim 7, wherein
the light source device includes
a blue light emitting element configured to emit blue light,
a green light emitting element configured to emit green light, and
a red light emitting element configured to emit red light,
the panel module and the polarization plate are provided in an optical path of each of the red light, the green light, and the blue light, and
the cold plate is provided in at least the optical path of the red light.

16. The projector according to claim 7, further comprising
a pipe coupled to the cold plate, wherein
the pipe includes
a supply pipe configured to supply the liquid refrigerant to the circulation portion, and
a discharge pipe configured to discharge the liquid refrigerant having flowed through the circulation portion, and
at least one of the supply pipe and the discharge pipe is formed of a bellows tube.

17. A polarization unit comprising:
a polarization plate disposed to receive light;
a heat dissipation substrate having thermal conductivity equal to or greater than thermal conductivity of the polarization plate, and coupled to the polarization plate in a heat transferable manner; and
a cold plate configured to cool the polarization plate via the heat dissipation substrate, wherein
the heat dissipation substrate has
a first surface facing the polarization plate, and
a second surface opposite the first surface, and
the cold plate includes
an opening through which light passes,
a coupling portion disposed around the opening and thermally coupled to the second surface, and
a circulation portion through which a liquid refrigerant circulates.
